# EUROPEAN PATENT SPECIFICATION

(11) **EP 4 190 592 B1**
(45) Date of publication and mention of the grant of the patent: **27.08.2025**
(21) Application number: 22211092.6
(22) Date of filing: 02.12.2022
(51) Int. Cl.: B60C 9/18, B60C 9/20, B60C 19/12, B60C 1/00

(54) **PNEUMATIC TIRE HAVING A FIBER-REINFORCED RUBBER LAYER AND PREPARATION THEREOF**
LUFTREIFEN MIT FASERVERSTÄRKTER KAUTSCHUKSCHICHT UND HERSTELLUNG DAVON
PNEUMATIQUE COMPORTANT UNE COUCHE DE CAOUTCHOUC RENFORCÉE PAR DES FIBRES ET SA PRÉPARATION

(30) Priority: 06.12.2021 US 202117457685
(43) Date of publication of application: 07.06.2023
(73) Proprietor: The Goodyear Tire & Rubber Company, Akron, OH 44316 (US)
(72) Inventor: DENNIS-PELCHER, Robert Vincent, Uniontown, 44685 (US); SANDSTROM, Paul Harry, Cuyahoga Falls, 44223 (US)
(74) Representative: Kutsch, Bernd

(56) References cited:
- EP-A1- 2 465 898
- EP-A1- 3 981 612
- EP-A2- 0 691 218
- JP-A- S61 119 408
- JP-A- S63 203 405
- US-A- 4 818 601

## Description

### Field of the Invention

The present invention is directed to a pneumatic tire having a fiber-reinforced rubber layer that can be situated beneath the tire tread or base layer, if present, and can help prevent penetration of foreign objects from extending beyond the tread or base layer and further into an underlying layer(s), and preparation thereof.

### Background of the Invention

Pneumatic tires, such as airplane tires, typically include a carcass of a ply construction where the carcass plies are composed of a rubber composition reinforced with continuous cords. Such cords may be composed of, for example, synthetic and/or natural filaments such as, for example, nylon, aramid, polyester, or rayon filaments or may be composed of steel or coated steel filaments. Such rubber compositions conventionally also contain a dispersion of filler composed of particulate rubber reinforcing carbon black or a combination of rubber reinforcing carbon black and precipitated silica. The tire carcass conventionally supports a circumferential rubber tread and any other components interposed between the two such as, for example, a circumferential belt ply, which is typically composed of reinforcing materials such as, for example, a continuous cord reinforcement.

Tire manufacturers are continually seeking ways to improve the lifespan of a tire (e.g., motor vehicle or airplane tires), such as by reducing or eliminating the penetration of foreign objects, including metal objects (e.g., nails, screws, and the like) or glass, into the underlying tire layers or components, e.g., an underlying belt layer(s), beneath the tread. In one example, when the tire tread is sufficiently worn, an airplane tire, for example, may be able to undergo retreading to extend the life of the tire. However, when during operation of the tire, a foreign object penetrates through the tread and base layer, if present, and the damage extends into the casing components, such as the reinforcing belt layer between the tread/base layer and carcass, this can detrimentally impact or prohibit retreading of the tire and, in general, reduce the overall lifespan of the tire.

Rubber/rubber compositions, such as for use in pneumatic tires (e.g., motor vehicles or airplane tires), can be reinforced with selected reinforcing fillers to enhance physical properties, including elastic modulus, to provide protective barrier properties such as for underlying tire layers. For example, various discontinuous fibers have been used as reinforcing fillers to provide barrier properties. In one example, aramid fibers have been used as dispersions thereof in rubber compounds, such as to enhance elastic modulus of rubber vulcanizates. Other discontinuous fibers have been suggested or used such as, for example, cellulose, polyamide (nylon), cotton, rayon, polyester, glass, and steel. For desirable rubber reinforcement, the length to diameter (L/D) ratio of the fiber, as well as fiber type, can be an important aspect for consideration. While fiber-reinforced tire layers may be utilized as a barrier/barrier layer within the tire construct and can provide protections to an underlying layer(s), further improvements in those tire layers and in tire life extension are continually being sought out.

Accordingly, there is understood to be a need for a pneumatic tire having an improved tire layer, which may be situated between the tire tread and carcass, that can provide enhanced protection to the tire by helping to prevent foreign objects from penetrating or extending beyond the tread and into its underlying layer(s), thereby desirably increasing the overall lifespan of the tire.

JP S63 203 405 A describes a tire in accordance with the preamble of claim 1.

EP 3 981 612 A1, which has been published only after the priority date of this application, describes a similar tire.

EP 2 465 898 A1 describes a tire having a rubber composition containing short fiber reinforcement such as aramid or polyester fibers together with silica and/or carbon black and a compatibilizer for said fibers.

EP 0 691 218 A2 and JP S61 119408 A each describe a tire having a tread, a carcass and a fiber-reinforced rubber layer situated between the carcass and the tread, said rubber layer comprising one or more rubbers, carbon black, silica and fibers.

US 4,818,601 A describes rubber-cord composite bodies that contain 0.5 to 10 parts by weight of a bismaleimide compound.

### Summary of the Invention

The invention relates to a tire in accordance with claim 1 and to a method in accordance with claim 14.

Dependent claims refer to preferred embodiments of the invention.

The present invention is directed to a pneumatic tire having a fiber-reinforced rubber layer that can help prevent foreign objects from penetrating or extending beyond the tread and into its underlying layer(s). The fiber-reinforced rubber layer can define a barrier/barrier layer and be reinforced with one or more fiber types and one or more specific chemical compounds to enhance the barrier layer properties.

In a preferred embodiment, a pneumatic tire is provided that includes an outer tread, a tire carcass situated below the outer tread and that acts as a supporting structure for the outer tread, and a fiber-reinforced rubber layer situated between the tire carcass and the outer tread. The fiber-reinforced rubber layer includes a rubber compound having 100 parts of one or more rubbers wherein the one or more rubbers is the total amount of rubber for the rubber compound. The rubber compound also includes carbon black and/or silica and one or more types of fiber selected from nylon, aramid, carbon, cotton, and polyester, the aramid fiber including pulp and/or aramid fiber, a crosslinking agent and/or a vulcanizing agent, wherein the crosslinking agent includes a dithiodicarboxylic acid and wherein the vulcanizing agent includes a dimaleimide. The dithiodicarboxylic acid is present in the rubber compound in an amount from 0.1 to 5 phr and the dimaleimide is present in the rubber compound in an amount from 0.1 to 5 phr.

In another preferred embodiment, a pneumatic tire is provided that includes an outer tread, a tire carcass situated below the outer tread and that acts as a supporting structure for the outer tread, and a fiber-reinforced rubber layer situated between the tire carcass and the outer tread. The fiber-reinforced rubber layer includes a rubber compound having 100 parts of one or more rubbers wherein the one or more rubbers is the total amount of rubber for the rubber compound, carbon black and/or silica, a secondary fiber selected from a syndiotactic polybutadiene fiber, and one or more types of fiber selected from nylon, aramid, carbon, cotton, and polyester, the aramid fiber including pulp and/or aramid fiber. The rubber compound further includes a crosslinking agent, a vulcanizing agent, and an accelerator, wherein the crosslinking agent is dithiodiproprionic acid, the vulcanizing agent is N,N'-m-phenylene dimaleimide, and the accelerator is zinc dibenzyl dithiocarbamate, with each being present in the rubber compound in an amount from 0.1 to 5 phr.

In another preferred embodiment, a method of making a pneumatic tire pneumatic tire is provided that includes positioning a tire carcass on a tire-building apparatus and positioning a fiber-reinforced rubber layer on the tire carcass. The fiber-reinforced rubber layer includes a rubber compound having 100 parts of one or more rubbers wherein the one or more rubbers is the total amount of rubber for the rubber compound, carbon black and/or silica, one or more types of fiber selected from nylon, aramid, carbon, cotton, and polyester, the aramid fiber including pulp and/or aramid fiber, and a crosslinking agent and/or a vulcanizing agent wherein the crosslinking agent includes a dithiodicarboxylic acid and wherein the vulcanizing agent includes a dimaleimide. The dithiodicarboxylic acid is present in the rubber compound in an amount from 0.1 to 5 phr and the dimaleimide is present in the rubber compound in an amount from 0.1 to 5 phr. The method further includes disposing outwardly of the fiber-reinforced rubber layer a tread to define an uncured tire assembly.

By virtue of the foregoing, there is provided a pneumatic tire having a fiber-reinforced rubber layer that can help prevent foreign objects from penetrating or extending beyond the tread and into its underlying layer(s) thereby desirably increasing the overall lifespan of the tire.

### Brief Description of the Drawings

The accompanying drawings, which are incorporated in and constitute a part of this specification, illustrate embodiments of the invention and, together with the general description of the invention given above, and detailed description given below, serve to explain the invention.
FIG. 1 is a cross-sectional view of a pneumatic tire with fiber-reinforced rubber layer in accordance with an embodiment of the present invention;
FIG. 2 is a partial perspective view of the fiber-reinforced rubber layer of FIG. 1 in accordance with an embodiment of the present invention; and
FIG. 3 is a partial perspective view of a variation of the fiber-reinforced rubber layer of FIG. 1 in accordance with another embodiment of the present invention.

### Detailed Description of Preferred Embodiments of the Invention

In the description of this invention, the terms "rubber" and "elastomer" where used herein, are used interchangeably, unless otherwise prescribed. The terms "rubber composition," "compounded rubber," and "rubber compound," where used herein, are used interchangeably to refer to "rubber which has been blended or mixed with various ingredients." The term "compound" relates to a "rubber composition" unless otherwise indicated. In addition, the term "phr" refers to parts of a respective material per hundred parts by weight of rubber or elastomer.

"Pneumatic tire" refers to a laminated mechanical device of generally toroidal shape (usually an open-torus) having bead cores and a tread and made of rubber, chemicals, fabric, and steel, or other materials. When mounted on the wheel of a motor vehicle or aircraft (and the like), the tire through its tread can provide traction and further sustain the vehicle load. "Carcass" means the tire structure apart from the belt structure, tread, undertread or tread base, and sidewall rubber over the plies, but including the bead cores. "Sidewall" refers to that component that includes a portion of the outside surface of a tire between the tread and the bead. "Tread" refers to a molded rubber component which, when bonded to a tire casing, includes that portion of the tire that comes into contact with the road when the tire is normally inflated and under normal load.

"Axial" and "axially" refer to the lines or directions that are parallel to the axis of rotation of the tire. "Radial" and "radially" refer to the lines or directions toward or away from the axis of rotation of a tire. "Circumferential" or "circumferentially" refers to the portion of the tire at or near the farthest radial distance from the axis of rotation. "Equatorial Plane" ("EP") refers to the plane perpendicular to the tire's axis of rotation and passing through the center of its tread.

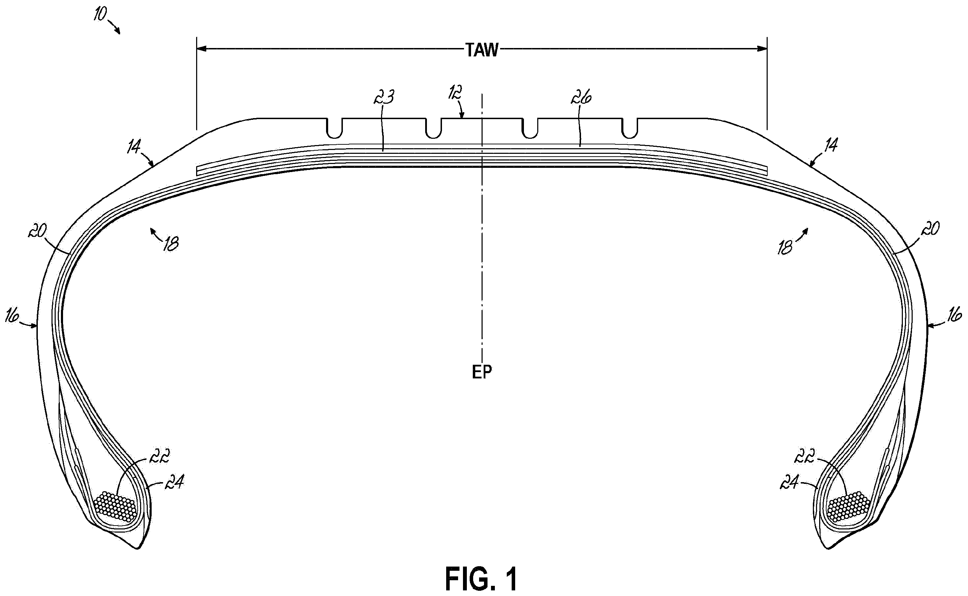

FIG. 1 shows a simplified cross-section of a pneumatic tire 10 that has an improved lifespan and capacity for retreading. The tire 10 includes an outer tread 12 and a pair of sidewalls 16 wherein the sidewalls 16 are connected to the tread portion 12 by shoulder regions 14. The outer circumferential tread 12 is adapted to be ground contacting when the tire 10 is in use. The shoulder regions 14 extend predominantly axially outwardly from the outer tread 12. The sidewalls 16 extend predominantly radially inwardly from the shoulder regions 14. FIG. 1 also illustrates the equatorial plane (EP") and the Tread Arc Width ("TAW") of the tire 10.

A carcass 18 of the tire 10 can include one or more continuous radial plies 20 extending from side to side. The carcass 18 is located radially inwardly from the tread 12 and axially inwardly from the sidewalls 16. The carcass 18 acts as a supporting structure for components located axially or radially outwardly from the carcass 18, such as the tread 12 and sidewalls 16. The one or more radial plies 20 may include cords or reinforcing wires of, for example, steel, nylon, polyester, rayon, glass, etc., embedded in a rubber matrix. Carcass 18 of the tire has a pair of axially spaced bead wires 22 around which are wrapped the distal ends of the radial plies 20. The bead wires 22 may include, for example, substantially inextensible coils made of round metal filaments.

The tire 10 further includes at least one circumferential belt ply 23 that is situated between the tread 12 and carcass 18. The belt ply 23 can be composed of continuous cord reinforcement, which may include materials conventionally used by those having skill in the art such as, for example, metallic wire (e.g., steel), glass, polyester, nylon, aramid, or other reinforcing material. The cords of the belt ply 23 may also include a plurality of plies of different yarns, e.g., nylon and aramid, which can be helically twisted to form a cable.

In one embodiment, the tire 10 further includes an optional inner liner (or air barrier layer) 24 disposed radially inwardly from the carcass 18. The optional rubber tire inner liner 24 may be any known rubber inner liner for use in pneumatic tires 10. In one example, the rubber inner liner 24 can be a non-butyl general purpose rubber (GPR). In another example, the rubber inner liner 24 can be a sulfur curative-containing halobutyl rubber composition of a halobutyl rubber such as for example chlorobutyl rubber or bromobutyl rubber. Such tire halobutyl rubber based inner liner layer may also contain one or more sulfur curable diene-based elastomers such as, for example, cis 1,4-polyisoprene natural rubber, cis 1,4-polybutadiene rubber and styrene/ butadiene rubber, or mixtures thereof. Rubber inner liner 24 is typically prepared by conventional calendaring or milling techniques such as to form a strip of uncured compounded rubber of appropriate width. When the tire 10 is cured, the rubber inner liner 24 becomes an integral, co-cured, part of the tire 10. Tire inner liners, like that of rubber inner liner 24, and their methods of preparation are well known to those having skill in such art.

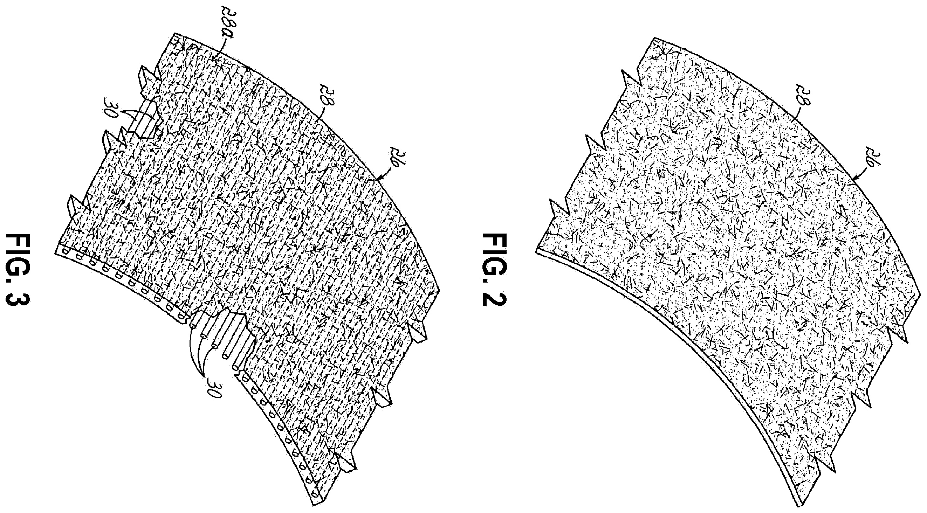

With reference to FIGS. 1 and 2, the tire 10 further includes at least one fiber-reinforced rubber layer 26, which can be generally supported by the carcass 18 and interposed directly between the tread 12 and belt ply 23, for example. The fiber-reinforced rubber layer 26 can define a barrier/barrier layer between the tread 12 and belt ply 23 and includes a rubber compound that is reinforced with one or more types of fiber 28 in the form of chopped fiber and has one or more specific chemical compounds that can provide desirable barrier properties (e.g., desirable penetration resistance and tear resistance while maintaining desirable cut growth properties), thereby helping to prevent foreign objects from extending beyond the tire tread 12 and into its underlying layer(s), such as the belt ply 23 and carcass 18, and desirably increasing the overall lifespan of the tire 10. Foreign objects can include, for example, metal objects and debris, such as nails, screws, and the like, glass objects and debris, such as broken glass, and the like that are known to puncture and penetrate tires.

With further reference to FIG. 3, the fiber-reinforced rubber layer 26 is shown further including reinforcing continuous cords 30, which can extend across the width thereof and can define a belt ply layer, not unlike belt ply 23. With this variation, the fiber-reinforced rubber layer 26 of FIG. 3 can take the place of the belt ply 23 of FIG. 1 altogether or define an additional belt ply layer that acts as a barrier layer. The cords 30 may include materials conventionally used by those having skill in the art such as, for example, metallic wire (e.g., steel), glass, polyester, nylon, aramid, or other reinforcing material. Cords 30 may also include a plurality of plies of different yarns, e.g., nylon and aramid, which are helically twisted to form a cable. The fiber-reinforced rubber layer 26 of FIG. 3 also can include a secondary fiber 28a, which is discussed in greater detail below.

Various rubbers, including mixtures thereof, can be used as the rubber component of the rubber compound for the fiber-reinforced rubber layer 26. Some suitable rubbers to be used either alone or as a mixture include, for example, natural and synthetic cis 1,4-polyisoprene (polyisoprene), polybutadiene (solution and emulsion), including cis-polybutadiene, styrene/butadiene co-polymers (solution and emulsion), butyl and halobutyl rubbers, EPDM rubbers, butadiene/acrylonitrile rubbers, neoprene, vinyl polybutadiene, and viscoelastic rubbers generally. In one example, the rubber used includes natural rubber. In another example, the rubber used includes cis-polybutadiene or polyisoprene. In one embodiment, the amount of rubber is 100 phr so that it may be used as a basis for determining the relative amounts of other materials added to the rubber compound of the fiber-reinforced rubber layer 26.

Concerning the fiber 28 in the rubber compound of the fiber-reinforced rubber layer 26, the types of fiber 28 can include one or more of nylon, aramid (pulp and/or fiber), carbon, cotton, polyester, and the like. In one example, the fiber 28 is a nylon fiber. One suitable type of nylon fiber is a nylon chopped fiber available from Finite Fiber of Akron, Ohio. Such fibers can be multifilament, plied, and/or twisted fiber bundles that may be surface treated, such as with an adhesive, which is further discussed below. In another example, the fiber 28 includes an aramid pulp and aramid fiber blend. One suitable type of aramid pulp and fiber blend is Varamix^{®} available from Finite Fiber of Akron, Ohio.

The fibers 28 can include a desired length and diameter. In one embodiment, the individual fibers 28 have a high length to diameter (L/D) aspect ratio. That is, the length can be significant relative to the diameter of the fiber 28. Means and methods known to those in the art for making the fibers as well as for providing the fibers in a desired size(s) (length and diameter) can be used. The fiber 28 is chopped to provide a desired length. The fibers 28 may also include a desired surface area. In one example, the aramid pulp is a fibrillated fiber that will have a main trunk portion of a desired length and the fibrils thereof along with the trunk portion may have a desired surface area. In another example, the fibers 28, which are chopped, can be blended with one or more continuous fibers (not shown) such as selected from the various types of fiber as discussed herein (e.g., nylon, aramid, carbon, cotton, polyester, and the like). Here, the length of the continuous fiber can be significant as compared to that of fibers 28.

In one embodiment, the fibers 28 (with the exception of the aramid fiber and/or pulp) can have a length (L) from 0.5 mm to 6 mm and a diameter (D) from 0.015 mm to 0.035 mm. In one example, the length can be from 3 to 5 mm. In another example, the diameter can be from 0.020 to 0.030 mm. In another example, the diameter of the fibers 28 can be at least 0.0001 mm. In one embodiment, the fibers (excluding the aramid fiber and pulp mix) can have a length to diameter (L/D) aspect ratio from 14 to 400. In another example, the fiber can have a high aspect (L/D) ratio from 100 to 250.

In another embodiment, the fiber 28 can be an aramid fiber and/or pulp, which can have a length/trunk length from 0.05 mm to 2 mm and a diameter from 0.010 mm to 0.020 mm. In one example, the length can be from 0.1 to 1.25 mm. In another example, the diameter can be from 0.0125 to 0.0175 mm. In one embodiment, the aramid fiber and/or pulp can have a length to diameter (L/D) aspect ratio from 2.5 to 200. In another example, the fibers can have an aspect ratio from 5.5 to 100. In one example, the aramid fibers and/or pulp can have a surface area of 4 to 20 square meters per gram, which can generally designate a low to a high surface area.

The total amount of fibers 28 in the rubber compound is from 1 to 20 phr. Preferably, the fibers are present in an amount from 2.5 to 10 phr or from 4 to 6 phr.

Preferably, the fibers are uniformly dispersed within the fiber-reinforced rubber layer 26. The fibers 28 optionally may be incorporated into the rubber composition with an adhesive treatment (e.g., pre-treated or treated in situ), as known in the art, to improve rubber to textile (fiber) bonding. In one embodiment, the optional adhesive treatment includes a resorcinol formaldehyde latex (RFL) and the like. For example, the fibers 28 may be (fully or partially) pretreated with the RFL prior to being incorporated into the rubber composition.

In another embodiment, along with the fibers 28 discussed above, a secondary fiber 28a (See FIG. 3) may be added to the rubber compound of the fiber-reinforced rubber layer 26, such as to increase the degree of reinforcement of the rubber compound. In one embodiment, the secondary fiber 28a can include syndiotactic polybutadiene fibers and the like. The use of a crystalline fiber, such as syndiotactic polybutadiene, can increase the reinforcement properties, particularly at low strain. As the secondary fiber 28a becomes more crystalline, it can become stronger when strained or strained in the compound, independent of the other fibers 28 used in the compound. In one example, the melt temperature of the syndiotactic polybutadiene fibers can be between 70°C to 210°C and, in another example, from 70°C to 170°C.

The secondary fibers 28a (e.g., syndiotactic polybutadiene fiber), like the fibers 28 above, can have a high length to diameter (L/D) aspect ratio. That is, the length can be significant relative to the diameter of the secondary fiber. Means and methods known to those in the art for making the secondary fibers 28a as well as for providing the secondary fibers 28a in a desired size(s) (length and diameter) can be used. In one example, the secondary fibers 28a may be cut, chopped, or the like to provide a desired length. In one embodiment, the secondary fiber 28a can have a length (L) from 0.5 mm to 6 mm and a diameter (D) from 0.015 mm to 0.035 mm. In one example, the length can be from 3 to 5 mm. In another example, the diameter can be from 0.020 to 0.030 mm. In another example, the diameter of the secondary fibers 28a can be at least 0.0001 mm. In one embodiment, the secondary fibers 28a can have a length to diameter (L/D) aspect ratio from 14 to 400. In another example, the secondary fiber 28a can have a high aspect (L/D) ratio from 100 to 250. In one embodiment, the secondary fiber 28a can be present in the rubber compound in an amount from 2 to 20 phr. In another example, the secondary fibers 28a can be present in an amount from 5 to 15 phr.

Concerning the specific additional chemical compounds in the rubber compound of the fiber-reinforced rubber layer 26, the additional chemical compounds can include a crosslinking agent and/or a vulcanizing reagent, with an accelerator (cure accelerator) optionally combined with the vulcanizing reagent when used, that can provide desirable barrier properties as previously discussed (e.g., desirable penetration resistance and tear resistance while maintaining desirable cut growth properties) along with the fibers 28, 28a, thereby helping to prevent foreign objects from penetrating or extending beyond the tire tread 12 and into its underlying layer(s), such as the belt ply 23 and carcass 18, and desirably increasing the overall lifespan of the tire 10.

In one example, the added crosslinking agent can include a dithiodicarboxylic acid, such as dithiodiproprionic acid, and can be present in the rubber compound in an amount from 0.1 to 5 phr. Preferably, the crosslinking agent is present in an amount from 0.5 to 2 phr or from 0.5 to 1 phr.

The vulcanizing reagent can include a maleimide, such as a dimaleimide including N,N'-m-phenylenedimaleimide and the like, and can be present in the rubber compound in an amount from 0.1 to 5 phr. Preferably, the vulcanizing reagent is present in an amount from 0.5 to 2 phr or from 0.5 to 1 phr.

In a further embodiment, the optional accelerator can include a dithiocarbamate, such as a benzyl dithiocarbamate or a salt thereof, including, for example, zinc dibenzyl dithiocarbamate and the like, and can be present in the rubber compound in an amount from 0.1 and 5 phr. In another example, the accelerator can be present in an amount from 0.5 to 2 phr and, in another example, from 0.5 to 1 phr.

Along with the above noted crosslinking agent, vulcanizing reagent, and optional accelerator, various other processing additives, fillers, and other materials may be incorporated into the rubber compound of the fiber-reinforced rubber layer 26 such as in conventional amounts. Oils, if used, may include conventional processing oils known to people having ordinary skill in the art such as, for example, aromatic, paraffinic, naphthenic, vegetable oils, and low PCA oils such as, for example, MES, TDAE, SRAE, and heavy naphthenic oils. Typical amounts of oil, if used, are from 0.1 to 70 phr. Resins, if used, may include those resins conventionally used by those having skill in the art. In one example, the resin can include the reaction product of a methylene donor, such as hexamethylenetetramine and hexamethoxy methylamine, and a methylene acceptor, such as resorcinol and the like, including modified versions thereof. Typical amounts of resins, if used, are from 0.5 to 10 phr. Fatty acids, if used, may include those fatty acids conventionally used by those having skill in the art such as, for example, stearic acid and the like. Typical amounts of fatty acids, if used, can be from 0.5 to 3 phr. Typical amounts of zinc oxide, if used, are from 1 to 5 phr. Waxes, such as microcrystalline waxes or paraffinic waxes, may be used. Typical amounts of waxes, if used, are from 1 to 5 phr. Antioxidants, if used, may include those antioxidants conventionally used by those having skill in the art such as, for example, polymerized trimethyl dihydroquinoline and others such as, for example, those disclosed in *The Vanderbilt Rubber Handbook* (1978), pages 344 through 346. Typical amounts of antioxidants, if used, are from 0.1 to 2 phr. Antiozonants, if used, may include those antioxidants conventionally used by those having skill in the art such as, for example, N'-(1,3-dimethylbutyl)-N'-phenylenediamine. Typical amounts of antiozonants, if used, are from 1 to 5 phr. Peptizing agents, if used, may include those peptizing agents conventionally used by those having skill in the art such as, for example, pentachlorothiophenol and dibenzamidodiphenyl disulfide. Typical amounts of peptizing agents, if used, are from 0.1 phr to 1 phr.

Fillers/reinforcing fillers may include, for example, carbon black and/or silica. Various commercially available silicas may be used such as, for example, silicas commercially available from PPG Industries such as those under the Hi-Sil trademark with designations 210, and 243; silicas commercially available from Solvay Rhodia such as, for example, those with designations of Z1165MP and Z165GR; and silicas available from Evonik such as, for example, those with designations VN2 and VN3. In one embodiment, precipitated silica can be used. In one embodiment, a siliceous pigment can be used that includes conventional pyrogenic and precipitated siliceous pigments. If precipitated silica is used, it may optionally be accompanied by a coupling agent having a moiety reactive with hydroxyl groups (e.g., silanol groups) contained on the surface of said silica and another moiety interactive with the rubber compound(s) used in conventional amounts. Or pre-treated silica can be used, which can be pretreated with a coupling agent prior to addition to a Banbury or internal mixing device, for example. If carbon black is used, it may include a readily available carbon black such as, for example, N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. In one embodiment, the total amount of carbon black and/or silica is from 20 to 100 phr and, in another example, the total amount of carbon black and/or silica is from 30 to 85 phr.

The rubber composition for the fiber-reinforced rubber layer 26 as well as the various tire components - including the tread portion 12, shoulder regions 14, sidewalls 16, the rubber matrix portion of carcass 18, and the at least one belt ply 23 - may be compounded by methods generally known in the rubber compounding art. One such method is mixing the various sulfur-vulcanizable constituent rubbers with the above noted materials/chemical compounds and processing additives such as, for example, any fillers, pigments, fatty acids, zinc oxide, waxes, antioxidants, antiozonants, peptizing agents, and reinforcing materials and other various commonly used additive materials such as, for example, sulfur donors, curing aids, and the like in a mixing device such as a Banbury. As known to those skilled in the art, depending on the intended use of the sulfur vulcanizable and sulfur vulcanizable material (rubbers), the additives mentioned above can be selected and commonly used in conventional amounts.

By way of example, vulcanization can be conducted in the presence of a sulfur donor or vulcanizing agent. Examples of suitable sulfur vulcanizing agents may include, for example, elemental sulfur (free sulfur), or sulfur donating vulcanizing agents such as, for example, an amine disulfide, polymeric polysulfide, or sulfur olefin adducts. In one embodiment, the sulfur vulcanizing agent is elemental sulfur. The amount of elemental sulfur used can be from 0.5 to 4 phr.

Curing agents may be used to further control the vulcanization process using primary accelerators, such as sulfenamides, and additional secondary vulcanization accelerators also may be used such as to help control the time and/or temperature required for vulcanization and to improve properties of the vulcanizate. Commonly used types of secondary accelerators that may be used are amines, disulfides, guanidines, thioreas, thiazoles, thiurams, sulfonamides, and xanthates and in conventional amounts. Vulcanization retarders also might also be used. If used, vulcanization retarders may include compounds such as, for example, n-cyclohexyl thiophthalimide and the like in conventional amounts.

The mixing of the rubber composition can be accomplished by a sequential mixing process that can include at least one non-productive mixing step followed by a productive mixing step in a Banbury. For example, the ingredients/components may be mixed in two or more (sometimes at least three) mixing stages, namely, at least one non-productive (preparatory) stage followed by a productive (final) mix stage. The final curatives are typically mixed in the final stage, which is conventionally called the "productive" or "final" mix stage in which the mixing typically occurs at a temperature, or ultimate temperature, lower than the mix temperature(s) of the preceding non-productive mix stage(s).

The rubber compound may be subjected to a thermomechanical mixing step. The thermomechanical mixing step generally includes a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

It is conventionally required after each mixing step that the rubber mixture is actually removed from the rubber mixer and cooled to a temperature of less than 40°C. It is conventionally required that the rubber compound is subsequently added back to an internal rubber mixer for the next rubber mixing step, or stage. It is also considered that other conventionally known methods for achieving mixtures of the different compounds such as, for example, a masterbatch, may be implemented instead of or in addition to the conventional dry mixing steps set out above.

In one embodiment, a masterbatch of rubber (e.g., natural or synthetic rubber, or cis-polybutadiene), filler (e.g., carbon black and/or silica), the chopped fibers 28 (e.g. treated or untreated), and a crosslinking agent (e.g., dithiodipropionic acid) and/or vulcanizing reagent (e.g., N,N'-m-phenylenedimaleimide) further optionally with an accelerator (e.g., zinc dibenzyl dithiocarbamate) may be initially formed. The masterbatch also may further optionally include syndiotactic polybutadiene fibers 28a. In one example, the syndiotactic polybutadiene fibers can be produced in high cis-polybutadiene (having at least 90% cis-content or at least 95% cic-content) during polymerization. Examples of such compound are available from UBE Industries, LTD designated as VCR412 (12%) and VCR617 (17%), which indicate 12% and 17% syndiotactic polybutadiene, respectively. The additional rubber compounding components then can be added to the masterbatch in line with the sequential mixing process, as discussed above, to make the final rubber compound, which here is the fiber-reinforced rubber layer 26, for use in the tire 10, such as an airplane tire. In one example, the syndiotactic polybutadiene fibers may be 12-17% of the masterbatch. Starting with a masterbatch can provide better dispersion of the materials, which can improve penetration resistance as well as tear resistance and cut growth properties, and ultimately provide improved abrasion resistance for the fiber-reinforced rubber layer 26.

Vulcanization of the tire 10 can generally be carried out at conventional temperatures from 100° C to 200° C. In one embodiment, the vulcanization can be conducted at temperatures from 110° C to 180° C. Any of the usual vulcanization processes may be used such as heating in a press or mold, heating with superheated steam or hot air. Such tires can be built, shaped, molded and cured by various methods, which are known and will be readily apparent to those having skill in such art.

The resulting tire 10 of the present invention with its fiber-reinforced rubber layer 26 may be a race tire, passenger tire, aircraft tire, agricultural, earthmover, off-the-road, truck tire, and the like. In one embodiment, the tire 10 is a motor vehicle or aircraft tire. The tire 10 may also be a radial or bias tire.

With reference to the examples/samples and Tables below, the non-productive batches were mixed for 4.5 minutes to a drop temperature of 160°C with the productive mix being mixed for 3.5 minutes to a drop temperature of 108°C to produce the rubber compounds.

Concerning testing/test results, the uncured G'/RPA data was measured using ASTM D6601 on a Rubber Process Analyzer RPA2000^{™} by Alpha Technologies. The tensile, modulus, and elongation data was measured using ASTM D412-98a. The Zwick rebound data was measured using ASTM D1415. The Instron Tear data, which obtains a measure of interfacial tear on stocks that have been cured with backing materials, is measured using a sample cured in a 76 x 153 x 12.7 mm mold for a specified time and temperature. The cured stock is died out into 25.4 x 153 mm strips, scored to 6.35 mm interfacial width, then tested on an Instron at 508 mm/min. The penetration energy data measures the energy required to drive a cone-shaped indenter into a sample at different penetration depths under constant crosshead speed. A compound block measuring 25 mm x 25 mm x 50 mm is placed on the compression plate fixture of a force displacement tester. A cone-shaped indenter having a 45° angle and a diameter of 4.8 mm is attached to the crosshead of the tester. The indenter is driven into the sample block at three evenly spaced points on the surface and the energy required to reach difference depths is recorded. The DIN data was measured using ASTM 5963. The De Mattia data, which covers the determination of crack growth of vulcanized rubber, was measured using a cured test specimen with a transverse half-cylinder groove and a small puncture at the center of the groove. The specimen is subjected to a flexion action at the groove from a straight to a doubled in half position. The flexing action induces a tear starting at the puncture and traveling laterally across the groove. Once cracking is detected, the time and crack length are recorded. The Volume Resistivity, which determines electrical resistivity of a rubber compound, was measured using a circular specimen, four inches in diameter, and subjecting the same to an electric current of 10 volts, which alternates polarity (+10 to -10 volts). The specimen is held at each voltage for 30 seconds, and a high resistance electrometer measures the current passing through it. After four readings, the average is taken and the process continues until eight average currents are taken. The MDR data was obtained according to the Rheometer MDR2000^{™} by Alpha Technologies.

**Table 1A**

| **Ingredient** | **Stage** | **Sample A** | **Sample B** | **Sample C** | **Sample D** | **Sample E** | **Sample F** | **Sample G** |
|---|---|---|---|---|---|---|---|---|
| Natural Rubber | NP1 | 100 | 100 | 100 | 100 | 100 | 100 | 100 |
| Carbon Black¹ | NP1 | 30 | 30 | 30 | 30 | 30 | 30 | 30 |
| Antioxidant - Polymerized Trimethyl Dihydroquinoline | NP1 | 1 | 1 | 1 | 1 | 1 | 1 | 1 |
| Oil² | NP1 | 2 | 2 | 2 | 2 | 2 | 2 | 2 |
| Zinc Oxide | NP1 | 3 | 3 | 3 | 3 | 3 | 3 | 3 |
| Stearic Acid | NP1 | 1 | 1 | 1 | 1 | 1 | 1 | 1 |
| 1 mm Nylon³ | NP1 | | 5 | 5 | 5 | | | |
| 4 mm Nylon⁴ | NP1 | | | | | 5 | 5 | 5 |
| Carbon Black | NP2 | 10 | 10 | 10 | 10 | 10 | 10 | 10 |
| Oil² | NP2 | 1 | 1 | 1 | 1 | 1 | 1 | 1 |
| N-N'-m-phenylenedi maleimide | PR | | | 1 | 1 | | 1 | 1 |
| Zinc Dibenzyl dithiocarbamate | PR | | | | 0.5 | | | 0.5 |
| Sulfur | PR | 1.8 | 1.8 | 1.8 | 1.8 | 1.8 | 1.8 | 1.8 |
| TBBS Accelerator | PR | 1.2 | 1.2 | 1.2 | 1.2 | 1.2 | 1.2 | 1.2 |
| Retarder⁵ | PR | 0.1 | 0.1 | 0.1 | 0.1 | 0.1 | 0.1 | 0.1 |
| **Total phr** | | **151.1** | **156.1** | **157.1** | **157.6** | **156.1** | **157.1** | **157.6** |

| | | | | | | | | |
|---|---|---|---|---|---|---|---|---|
| ¹ ASTM N299 carbon black ² Naphthenic, paraffinic processing oil ³ Chopped nylon fiber, 1 mm length ⁴ Chopped nylon fiber, 4 mm length ⁵ N-cyclohexylthiophthalimide | | | | | | | | |

With reference to Table 1A, Sample A is a control and is completely devoid of any fibers, vulcanizing reagents (e.g., N,N'-m-phenylenedimaleimide), or accelerators (e.g., zinc dibenzyl dithiocarbamate). Samples B-G were prepared using the same mixing parameters as those of Sample A. In the first non-productive Banbury mix stage, each of the components of the above samples were combined in the amounts shown in Table 1A. In comparison to Sample A, each of Samples B, C, and D further included 5 phr of 1 mm nylon fibers. Further in comparison to Sample A, each of Samples E, F, and G further included 5 phr of 4 mm nylon fibers.

In the third productive mixing step, additional compounds were added to Samples C, D, F, and G. In comparison to Sample B, each of Samples C and D further included 1 phr of N,N'-m-phenylenedimaleimide. Further in comparison to Sample C, Sample D further included 0.5 phr of zinc dibenzyl dithiocarbamate. In comparison to Sample E, each of Samples F and G further included 1 phr of N,N'-m-phenylenedimaleimide. Further in comparison to Sample F, Sample G further included 0.5 phr of zinc dibenzyl dithiocarbamate.

**Table 1B**

| **Compound Description** | | **Sample A** | **Sample B** | **Sampl e C** | **Sample D** | **Sample E** | **Sample F** | **Sample G** |
|---|---|---|---|---|---|---|---|---|
| **Processing** | Uncured G', RPA (MPa) | 0.16 | 0.17 | 0.17 | 0.17 | 0.17 | 0.17 | 0.17 |
| **Stiffness** | G' 1%, RPA (MPa) | 1.72 | 1.95 | 2.68 | 2.94 | 1.93 | 2.68 | 2.97 |
| | G' 1%, RPA (2nd Sweep) (MPa) | 1.42 | 1.6 | 1.93 | 2.16 | 1.58 | 1.96 | 2.14 |
| | G' 10%, RPA (MPa) | 1.04 | 1.2 | 1.5 | 1.61 | 1.25 | 1.53 | 1.64 |
| | G' 10%, RPA (2nd Sweep) (MPa) | 0.91 | 1.03 | 1.16 | 1.28 | 1.06 | 1.22 | 1.32 |
| | G' 50%, RPA (MPa) | 0.67 | 0.75 | 0.85 | 0.93 | 0.78 | 0.9 | 0.96 |
| | G' 50%, RPA (2nd Sweep) (MPa) | 0.67 | 0.75 | 0.85 | 0.92 | 0.78 | 0.89 | 0.96 |
| | 100% Modulus (Parallel to Grain) (MPa) | 2.25 | 3.84 | 5.77 | 6.13 | 5.96 | 7.5 | 8.47 |
| | 100% Modulus (Perpendic ular to Grain) (MPa) | 2.29 | 2.98 | 3.71 | 3.75 | 2.93 | 4 | 3.83 |
| | 300% Modulus (Parallel to Grain) (MPa) | 11.2 | 12.53 | 15.54 | 16.49 | 14.24 | 16.01 | 17.44 |
| | 300% Modulus (Perpendic ular to Grain) (MPa) | 11.79 | 11.26 | 13.3 | 14.18 | 11.32 | 13.37 | 13.67 |
| **Hysteresis** | TD 10%, RPA | 0.12 | 0.112 | 0.123 | 0.126 | 0.099 | 0.115 | 0.121 |
| | TD 10%, RPA (2nd Sweep) | 0.153 | 0.157 | 0.175 | 0.175 | 0.146 | 0.163 | 0.161 |
| | Zwick Rebound, 100°C (%) | 72 | 70 | 68 | 71 | 67 | 69 | 69 |
| **Stress Strain** | Tensile (Parallel to Grain) (MPa) | 27 | 20 | 20 | 20 | 20 | 19 | 19 |
| | Tensile (Perpendic ular to Grain) (MPa) | 27 | 19 | 19 | 18 | 18 | 18 | 16 |
| | Elongation (Parallel to Grain) (%) | 554 | 437 | 381 | 353 | 409 | 359 | 335 |
| | Elongation (Perpendic ular to Grain) (%) | 540 | 438 | 409 | 370 | 421 | 390 | 326 |
| | Strebler to Self, 95°C (N) | 139 | 113 | 83 | 48 | 108 | 80 | 40 |
| | Instron Tear, 95°C (N/mm) | 48 | 45 | 43 | 8 | 43 | 51 | 8 |
| | Penetratio n Energy, 5 mm (J) | 0.13 | 0.19 | 0.21 | 0.25 | 0.23 | 0.24 | 0.28 |
| | Penetratio n Energy, 10 mm (J) | 0.73 | 1.12 | 1.21 | 1.4 | 1.42 | 1.42 | 1.67 |
| | Penetratio n Energy, 15 mm (J) | 2.13 | 3.35 | 3.57 | 4.12 | 4.23 | 4.27 | 5.03 |
| | Penetratio n Energy, 20 mm (J) | 4.94 | 7.59 | 7.1 | 8.59 | 7.94 | 8.38 | 9.76 |
| **Wear/ Abrasion** | DIN | 149 | 120 | 118 | 119 | 123 | 124 | 119 |

With reference to Table 1B, Samples B and E, rubber compounds including nylon, Samples C and F, rubber compounds further including N,N'-m-phenylenedimaleimide, and Samples D and G, rubber compounds further including zinc dibenzyl dithiocarbamate, are compared against each other and against control Sample A. As can be seen by reviewing Table 1B, the addition of nylon fibers (Samples B and E) results in a rubber composition with increased stiffness, increased resistance to penetration, and increased resistance to wear or abrasion when compared to the control Sample A. The same characteristics of rubber compounds having nylon and N,N'-m-phenylenedimaleimide (Samples C and F) are further improved when comparing rubber compounds without N,N'-m-phenylenedimaleimide (Samples B and E respectively). The same characteristics of rubber compounds having nylon, N,N'-m-phenylenedimaleimide, and zinc dibenzyl dithiocarbamate (Samples D and G) are even further improved when compared with rubber compounds without zinc dibenzyl dithiocarbamate (Samples C and F respectively). It should also be noted that the addition of nylon, N,N'-m-phenylenedimaleimide, zinc dibenzyl dithiocarbamate, or a combination thereof does not substantially compromise hysteresis exhibited by the rubber compositions. These experiments show that N,N'-m-phenylenedimaleimide and zinc dibenzyl dithiocarbamate can be used in rubber compositions along with fibers to improve tire carcass lifespan without sacrificing fuel economy.

With further reference to Table 1B, rubber compounds with equivalent components save for the difference in length of included nylon fibers - Samples B and E, Samples C and F, and Samples D and G - were compared against each other. As can be seen by reviewing Table 1B, rubber compounds containing 4 mm nylon fibers have roughly equal or increased stiffness, resistance to penetration, and resistance to wear or abrasion when compared to rubber compounds where 4 mm nylon fibers are substituted with 1 mm nylon fibers. It should also be noted that rubber compositions having 4 mm nylon fibers exhibit less impact of hysteresis when compared to control Sample A than rubber compositions having 1 mm nylon fibers. Accordingly, these experiments show that either length of fiber may be used to improve the above characteristics, with rubber compositions having 4 mm nylon fibers demonstrating a benefit over rubber compounds having 1 mm nylon fibers for rubber compounds seeking to increase the life span of tire carcasses while not sacrificing fuel efficiency.

In addition, Instron tear is similar to the control with the addition of either fiber type, with or without the maleimide, but significantly reduced with the presence of the carbamate.

**Table 2A**

| **Ingredient** | **Stage** | **Sample A** | **Sample B** | **Sample C** | **Sample D** | **Sample E** | **Sample F** | **Sample G** |
|---|---|---|---|---|---|---|---|---|
| Natural Rubber | NP1 | 100 | 100 | 100 | 100 | 100 | 100 | 100 |
| Carbon Black¹ | NP1 | 30 | 30 | 30 | 30 | 30 | 30 | 30 |
| Antioxidant - Polymerized Trimethyl Dihydroquinoline | NP1 | 1 | 1 | 1 | 1 | 1 | 1 | 1 |
| Oil² | NP1 | 2 | 2 | 2 | 2 | 2 | 2 | 2 |
| Zinc Oxide | NP1 | 3 | 3 | 3 | 3 | 3 | 3 | 3 |
| Stearic Acid | NP1 | 1 | 1 | 1 | 1 | 1 | 1 | 1 |
| HSA Aramid Pulp/Fiber³ | NP1 | | 5 | | | 2.5 | 2.5 | 2.5 |
| MSA Aramid Pulp/Fiber⁴ | NP1 | | | 5 | | | | |
| LSA Aramid Pulp/Fiber⁵ | NP1 | | | | 5 | | | |
| 4 mm Nylon⁶ | NP1 | | | | | | 2.5 | 2.5 |
| Carbon Black¹ | NP2 | 10 | 10 | 10 | 10 | 10 | 10 | 10 |
| Oil² | NP2 | 1 | 1 | 1 | 1 | 1 | 1 | 1 |
| N-N'-m-phenylenedi maleimide | PR | | | | | | | 1 |
| Sulfur | PR | 1.8 | 1.8 | 1.8 | 1.8 | 1.8 | 1.8 | 1.8 |
| TBBS Accelerator | PR | 1.2 | 1.2 | 1.2 | 1.2 | 1.2 | 1.2 | 1.2 |
| Retarder⁷ | PR | 0.1 | 0.1 | 0.1 | 0.1 | 0.1 | 0.1 | 0.1 |
| **Total phr** | | **151.1** | **156.1** | **156.1** | **156.1** | **153.6** | **156.1** | **157.1** |

| | | | | | | | | |
|---|---|---|---|---|---|---|---|---|
| ¹ ASTM N299 carbon black ² Naphthenic, paraffinic processing oil ³ Aramid blend, high surface area ⁴ Aramid blend, medium surface area ⁵ Aramid blend, low surface area ⁶ Chopped nylon fiber, 4 mm length 7 N-cyclohexylthiophthalimide | | | | | | | | |

With reference to Table 2A, Sample A is a control and is completely devoid of any fibers or vulcanizing reagents (e.g., N,N'-m-phenylenedimaleimide). Samples B-G were prepared using the same mixing parameters as those of Sample A. In the first non-productive Banbury mix stage, each of the components of the above samples were combined in the amounts shown in Table 2A. In comparison to Sample A, each of Samples B, C, and D further included 5 phr of an aramid pulp/fiber blend, with the blend designated as having a high, medium, and low surface area, respectively.

In the first non-productive mixing step, in comparison to Sample A, each of Samples E, F, and G further included 2.5 phr of an aramid pulp/fiber blend designated as a high surface area (HSA) aramid pulp/fiber blend . In comparison to Sample E, each of Samples F and G further included 2.5 phr of a 4 mm nylon fibers. In comparison to Sample F, Sample G further included 1 phr of N,N'-m-phenylenedimaleimide.

**Table 2B**

| **Compound Description** | | **Sample A** | **Sample B** | **Sample C** | **Sample D** | **Sample E** | **Sample F** | **Sample G** |
|---|---|---|---|---|---|---|---|---|
| **Processing** | Uncured G', RPA (MPa) | 0.17 | 0.2 | 0.19 | 0.18 | 0.17 | 0.18 | 0.19 |
| **Stiffness** | G' 1%, RPA (MPa) | 1.75 | 2.19 | 2.09 | 2.03 | 1.96 | 2.08 | 2.93 |
| | G' 1%, RPA (2nd Sweep) (MPa) | 1.44 | 1.79 | 1.71 | 1.67 | 1.6 | 1.7 | 2.14 |
| | G' 10%, RPA (MPa) | 1.03 | 1.34 | 1.29 | 1.23 | 1.18 | 1.27 | 1.6 |
| | G' 10%, RPA (2nd Sweep) (MPa) | 0.9 | 1.19 | 1.15 | 1.09 | 1.04 | 1.13 | 1.32 |
| | G' 50%, RPA (MPa) | 0.64 | 0.85 | 0.83 | 0.78 | 0.75 | 0.82 | 0.95 |
| | G' 50%, RPA (2nd Sweep) (MPa) | 0.64 | 0.85 | 0.83 | 0.78 | 0.75 | 0.82 | 0.95 |
| | 100% Modulus (Parallel to Grain) (MPa) | 2.31 | 6.49 | 4.55 | 3.9 | 4.15 | 6 | 9.55 |
| | 100% Modulus (Perpendicular to Grain) (MPa) | 2.08 | 3.5 | 2.97 | 2.53 | 2.4 | 3.17 | 3.97 |
| | 300% Modulus (Parallel to Grain) (MPa) | 11.26 | 15.27 | 13.4 | 13.28 | 13.66 | 14.36 | 18.66 |
| | 300% Modulus (Perpendicular to Grain) (MPa) | 10.42 | 11.79 | 11.37 | 10.54 | 10.69 | 11.65 | 13.82 |
| **Hysteresis** | TD 10%, RPA | 0.125 | 0.112 | 0.112 | 0.116 | 0.119 | 0.116 | 0.13 |
| | TD 10%, RPA (2nd Sweep) | 0.16 | 0.145 | 0.143 | 0.151 | 0.153 | 0.147 | 0.162 |
| | Zwick Rebound, 100°C (%) | 73 | 69 | 71 | 72 | 71 | 69 | 69 |
| **Stress Strain** | Tensile (Parallel to Grain) (MPa) | 28 | 24 | 22 | 24 | 27 | 21 | 19 |
| | Tensile (Perpendicular to Grain) (MPa) | 28 | 21 | 20 | 20 | 23 | 18 | 17 |
| | Elongation (Parallel to Grain) (%) | 567 | 453 | 457 | 478 | 512 | 420 | 310 |
| | Elongation (Perpendicular to Grain) (%) | 578 | 467 | 445 | 473 | 515 | 430 | 361 |
| | Instron Tear, 95°C (N/mm) | 35 | 15 | 18 | 20 | 36 | 17 | 9 |
| **Wear/ Abrasion** | DIN | 106 | 125 | 128 | 127 | 113 | 116 | 120 |
| **Cure** | Delta Torque, MDR 150°C (ΔN*m) | 14.2 | 17.2 | 17 | 16.4 | 15.9 | 16.5 | 20.8 |
| | T25, MDR 150°C (min) | 7.7 | 8.2 | 8.2 | 8.2 | 8.1 | 8.2 | 8.9 |
| | T90, MDR 150°C (min) | 11.4 | 12 | 12 | 11.9 | 11.8 | 12 | 12.8 |

With reference to Table 2B, Sample B, a rubber compound containing a HSA aramid pulp/fiber blend, Sample C, a rubber compound containing a MSA aramid pulp/fiber blend, and Sample D, a rubber compound containing a L SA aramid pulp/fiber blend, were compared against each other and a control Sample A. As can be seen by reviewing Table 2B, the stiffness of the rubber compound was increased by using an aramid pulp with a higher surface area. It should also be noted that the addition of an aramid pulp/fiber blend to the rubber compound does not substantially compromise hysteresis exhibited by the rubber compound nor substantially increase the time needed to cure the rubber compound. However, the addition of any aramid pulp/fiber blend to the rubber composition decreases the wear and abrasion resistance of the compound without significant difference between the surface areas used. Accordingly, these experiments show that aramid pulp/fiber can improve penetration resistance that is considered to be relative to the increase of low strain stiffness measured at 1% strain, while compromising some of the other less desired cured properties of rubber compounds used in tires as barriers.

With further reference to Table 2B, Sample B, a rubber compound containing only HSA aramid pulp/fiber, and Sample F, a rubber compound including an equivalent amount of fiber divided evenly between HSA aramid pulp/fiber blend and 4 mm nylon fibers, were compared against each other and against a control Sample A. As can be seen by reviewing Table 2B, a rubber compound including both an aramid pulp/fiber blend and nylon fibers was slightly less stiff than a rubber composition with only an aramid pulp/fiber blend. It should also be noted that the addition of both an aramid pulp/fiber blend and nylon fibers to the rubber compound does not substantially compromise hysteresis exhibited by the rubber compound nor substantially increase the time needed to cure the rubber compound. However, the addition of both an aramid pulp/fiber blend and nylon fibers resulted in a rubber compound with a wear and abrasion resistance higher than a rubber composition including only an aramid pulp/fiber blend.

With further reference to Table 2B, Sample F, a rubber compound including an equal amount of HSA aramid pulp/fiber blend and 4 mm nylon fibers, and Sample G, a rubber compound including an equal amount of HSA aramid pulp/fiber blend and 4 mm nylon fibers which additionally includes N,N'-m-phenylenedimaleimide, are compared against each other and against control Sample A. As can be seen by reviewing Table 2B, the stiffness of the rubber compound further including N,N'-m-phenylenedimaleimide was increased relative to both the control and to the sample including fibers but not N,N'-m-phenylenedimaleimide. It should also be noted that the addition of both an aramid pulp/fiber blend and nylon fibers to the rubber compound does not substantially compromise hysteresis exhibited by the rubber compound nor substantially increase the time needed to cure the rubber compound. However, the addition of N,N'-m-phenylenedimaleimide resulted in a rubber composition with decreased wear and abrasion resistance when compared with either the control or Sample F. Accordingly, these experiments show that certain combinations of fibers can both provide improved low strain stiffness (1%) with different impacts on abrasion, tear, and hysteresis properties. Also, the addition of a maleimide provides further increase of low strain stiffness (1%) predictive of increased penetration resistance, which is a property indicator for improved barrier protection of an underlying belt and carcass compounds, for example.

**Table 3A**

| **Ingredient** | **Stage** | **Sample A** | **Sample B** | **Sample C** | **Sample D** | **Sample E** | **Sample F** |
|---|---|---|---|---|---|---|---|
| Natural Rubber | NP1 | 100 | 100 | 100 | 100 | 100 | 100 |
| Carbon Black¹ | NP1 | 30 | 30 | 30 | 30 | 30 | 30 |
| Antioxidant - Polymerized Trimethyl Dihydroquinoline | NP1 | 1 | 1 | 1 | 1 | 1 | 1 |
| Oil² | NP1 | 2 | 2 | 2 | 2 | 2 | 2 |
| Zinc Oxide | NP1 | 3 | 3 | 3 | 3 | 3 | 3 |
| Stearic Acid | NP1 | 1 | 1 | 1 | 1 | 1 | 1 |
| Carbon Fiber³ | NP1 | | 2.5 | 5 | 10 | 5 | 5 |
| Carbon Black | NP2 | 10 | 10 | 10 | 10 | 10 | 10 |
| Oil² | NP2 | 1 | 1 | 1 | 1 | 1 | 1 |
| N-N'-m-phenylene dimaleimide | PR | | | | | 1 | 0.8 |
| Zinc Dibenzyl dithiocarbamate | PR | | | | | | 0.2 |
| Sulfur | PR | 1.8 | 1.8 | 1.8 | 1.8 | 1.8 | 1.8 |
| TBBS Accelerator | PR | 1.2 | 1.2 | 1.2 | 1.2 | 1.2 | 1.2 |
| Retarder⁴ | PR | 0.1 | 0.1 | 0.1 | 0.1 | 0.1 | 0.1 |
| **Total phr** | | **151.1** | **153.6** | **156.1** | **161.1** | **157.1** | **157.1** |

| | | | | | | | |
|---|---|---|---|---|---|---|---|
| ¹ ASTM N299 carbon black ² Naphthenic, paraffinic processing oil ³ Synthesized from CO₂, iron, and natural gas or hydrogen, width is from 150-600 nm and BET from 120-190 m²/g ⁴ N-cyclohexylthiophthalimide | | | | | | | |

With reference to Table 3A, Sample A is a control and is completely devoid of any fibers, vulcanizing reagents (e.g., N,N'-m-phenylenedimaleimide), or accelerators (e.g., zinc dibenzyl dithiocarbamate). Samples B-F were prepared using the same mixing parameters as those of Sample A. In the first non-productive mix stage, each of the components of the above samples were combined in the amounts shown in Table 3A. In comparison to Sample A, each of Samples B, C, and D further included a carbon fiber filler. In Sample B, 2.5 phr of the carbon fiber filler was included. In Sample C, 5 phr of the carbon fiber filler was included. In Sample D, 10 phr of the carbon fiber filler was included. In comparison to Sample C, Sample E further included 1 phr of N,N'-m-phenylenedimaleimide. In further comparison to Sample C, Sample F further included 0.8 phr of N,N'-m-phenylenedimaleimide, and 0.2 phr of zinc dibenzyl dithiocarbamate.

**Table 3B**

| **Compound Description** | | **Sample A** | **Sample B** | **Sample C** | **Sample D** | **Sample E** | **Sample F** |
|---|---|---|---|---|---|---|---|
| **Processing** | Uncured G', RPA (MPa) | 0.17 | 0.18 | 0.17 | 0.21 | 0.2 | 0.19 |
| **Stiffness** | G' 1%, RPA (MPa) | 1.7 | 1.8 | 1.93 | 2.18 | 2.55 | 2.44 |
| | G' 1%, RPA (2nd Sweep) (MPa) | 1.49 | 1.54 | 1.64 | 1.8 | 1.96 | 1.91 |
| | G' 10%, RPA (MPa) | 1.16 | 1.2 | 1.27 | 1.36 | 1.53 | 1.49 |
| | G' 10%, RPA (2nd Sweep) (MPa) | 1.08 | 1.11 | 1.16 | 1.24 | 1.33 | 1.31 |
| | G' 50%, RPA (MPa) | 0.89 | 0.89 | 0.91 | 0.96 | 1.04 | 1.02 |
| | G' 50%, RPA (2nd Sweep) (MPa) | 0.05 | 0.06 | 0.07 | 0.09 | 0.08 | 0.09 |
| | 100% Modulus (Parallel to Grain) (MPa) | 2.39 | 2.58 | 2.82 | 3.52 | 3.32 | 3.3 |
| | 100% Modulus (Perpendicular to Grain) (MPa) | 2.11 | 2.24 | 2.51 | 2.83 | 2.89 | 2.88 |
| | 300% Modulus (Parallel to Grain) (MPa) | 11.59 | 12.26 | 12.91 | 14.13 | 14.89 | 14.53 |
| | 300% Modulus (Perpendicular to Grain) (MPa) | 10.28 | 10.86 | 11.98 | 12.82 | 13.61 | 13.35 |
| **Hysteresis** | TD 10%, RPA | 0.084 | 0.089 | 0.097 | 0.106 | 0.104 | 0.104 |
| | TD 10%, RPA (2nd Sweep) | 0.096 | 0.104 | 0.114 | 0.124 | 0.123 | 0.123 |
| | Zwick Rebound, 100°C (%) | 72 | 72 | 71 | 71 | 71 | 72 |
| **Stress Strain, Tear and Penetration Energy** | Tensile (Parallel to Grain) (MPa) | 27 | 27 | 25 | 25 | 23 | 26 |
| | Tensile (Perpendicular to Grain) (MPa) | 26 | 25 | 25 | 23 | 26 | 24 |
| | Elongation (Parallel to Grain) (%) | 558 | 539 | 503 | 496 | 434 | 493 |
| | Elongation (Perpendicular to Grain) (%) | 566 | 525 | 523 | 483 | 524 | 469 |
| | Instron Tear, 95°C (N/mm) | 33 | 39 | 36 | 30 | 36 | 27 |
| | Penetration Energy, 5 mm (J) | 0.14 | 0.15 | 0.15 | 0.17 | 0.17 | 0.17 |
| | Penetration Energy, 10 mm (J) | 0.75 | 0.8 | 0.84 | 0.94 | 0.96 | 0.96 |
| | Penetration Energy, 15 mm (J) | 2.15 | 2.32 | 2.44 | 2.73 | 2.8 | 2.78 |
| | Penetration Energy, 20 mm (J) | 4.91 | 5.34 | 5.64 | 6.32 | 6.42 | 6.38 |
| **Wear/ Abrasion** | DIN | 148 | 139 | 152 | 134 | 106 | 149 |
| **Cure** | Delta Torque, MDR 150°C (ΔN*m) | 15 | 15.4 | 16 | 16.8 | 19.1 | 19.1 |
| | T25, MDR 150°C (min) | 8 | 7.2 | 6.8 | 6 | 7.4 | 4.4 |
| | T90, MDR 150°C (min) | 11.5 | 10.6 | 10.2 | 9.4 | 11.1 | 6.6 |

With reference to Table 3B, Sample B, a rubber compound including 2.5 phr of carbon fibers, Sample C, a rubber compound including 5 phr of carbon fibers, and Sample D, a rubber compound including 10 phr of carbon fibers, were compared against each other and against the control Sample A. As can be seen from Table 3B, the stiffness, penetration resistance, and wear and abrasion resistance of a rubber compound is increased while the cure time is decreased by the inclusion of more carbon fiber. It should also be noted that the addition of carbon fiber to the rubber compound does not substantially compromise hysteresis exhibited by the rubber compound. Accordingly, these experiments show that the lifespan of the tire carcass can be improved without sacrificing fuel economy by tuning the amount of carbon fiber added.

With further reference to Table 3B, Sample C, a rubber compound including carbon fiber, Sample E, a rubber compound including carbon fiber and N,N'-m-phenylenedimaleimide, and Sample F, a rubber compound including carbon fiber, N,N'-m-phenylenedimaleimide, and zinc dibenzyl dithiocarbamate, were compared against each other and against control Sample A. As can be seen from Table 3B, the stiffness, penetration resistance, and wear and abrasion resistance of a rubber compound is increased while the cure time is increased by the inclusion of carbon fiber. The same characteristics can be further improved by the inclusion of N,N'-m-phenylenedimaleimide. Accordingly, these experiments show that the lifespan of the tire carcass can be improved without sacrificing fuel economy by including N,N'-m-phenylenedimaleimide.

**Table 4A**

| **Ingredient** | **Stage** | **Sample A** | **Sample B** | **Sample C** | **Sample D** | **Sample E** | **Sample F** | **Sample G** |
|---|---|---|---|---|---|---|---|---|
| Natural Rubber | NP1 | 100 | 100 | 100 | 100 | 100 | 100 | 100 |
| Carbon Black¹ | NP1 | 30 | 30 | 30 | 30 | 30 | 30 | 30 |
| Antioxidant - Polymerized Trimethyl Dihydroquinoline | NP1 | 1 | 1 | 1 | 1 | 1 | 1 | 1 |
| Oil² | NP1 | 2 | 2 | 2 | 2 | 2 | 2 | 2 |
| Zinc Oxide | NP1 | 3 | 3 | 3 | 3 | 3 | 3 | 3 |
| Stearic Acid | NP1 | 1 | 1 | 1 | 1 | 1 | 1 | 1 |
| 4 mm Nylon³ | NP1 | | 5 | 5 | | | 5 | 5 |
| Carbon Black¹ | NP2 | 10 | 10 | 10 | 10 | 10 | 10 | 10 |
| Oil² | NP2 | 1 | 1 | 1 | 1 | 1 | 1 | 1 |
| N-N'-m-phenylenedi maleimide | PR | | | 1 | 1 | | | |
| Dithiodiproprionic Acid | PR | | | | | 1 | 1 | 3 |
| Sulfur | PR | 1.8 | 1.8 | 1.8 | 1.8 | 1.8 | 1.8 | 1.8 |
| TBBS Accelerator | PR | 1.2 | 1.2 | 1.2 | 1.2 | 1.2 | 1.2 | 1.2 |
| Retarder⁴ | PR | 0.1 | 0.1 | 0.1 | 0.1 | 0.1 | 0.1 | 0.1 |
| **Total phr** | | **151.1** | **156.1** | **157.1** | **152.1** | **152.1** | **157.1** | **159.1** |

| | | | | | | | | |
|---|---|---|---|---|---|---|---|---|
| ¹ ASTM N299 carbon black ² Naphthenic, paraffinic processing oil ³ Chopped nylon fiber, 4 mm length 4 N-cyclohexylthiophthalimide | | | | | | | | |

With reference to Table 4A, Sample A is a control and is completely devoid of any fibers, crosslinking agents (e.g., dithiodiproprionic acid), or vulcanizing reagents (e.g., N,N'-m-phenylenedimaleimide). Samples B-G were prepared using the same mixing parameters as those of Sample A. In the first non-productive mix stage, each of the components of the above samples were combined in the amounts shown in Table 4A. In comparison to Sample A, each of Samples B, C, F and G further included 5 phr of 4 mm nylon fibers.

In the third productive mixing step, additional materials were added to each of Samples C-G in the amounts shown in Table 4A. In comparison to Sample A, Sample D further included 1 phr of N,N'-m-phenylenedimaleimide. In further comparison to Sample A, Sample E further included 1 phr of dithiodiproprionic acid. In comparison to Sample B, Sample C further included 1 phr N,N'-m-phenylenedimaleimide. In further comparison to Sample B, each of Sample F and Sample G further included 1 phr of dithiodiproprionic acid. In comparison to Sample F, Sample G further included an additional 2 phr of dithiodiproprionic acid for a total of 3 phr.

**Table 4B**

| **Compound Description** | | **Sample A** | **Sample B** | **Sample C** | **Sample D** | **Sample E** | **Sample F** | **Sample G** |
|---|---|---|---|---|---|---|---|---|
| **Processing** | Uncured G', RPA (MPa) | 0.17 | 0.19 | 0.19 | 0.18 | 0.19 | 0.22 | 0.22 |
| **Stiffness** | G' 1%, RPA (MPa) | 1.55 | 1.88 | 2.53 | 2.26 | 2.01 | 2.2 | 2.33 |
| | G' 1%, RPA (2nd Sweep) (MPa) | 1.36 | 1.62 | 1.93 | 1.76 | 1.73 | 1.89 | 1.98 |
| | G' 10%, RPA (MPa) | 1.13 | 1.32 | 1.58 | 1.45 | 1.43 | 1.55 | 1.6 |
| | G' 10%, RPA (2nd Sweep) (MPa) | 1.07 | 1.24 | 1.4 | 1.29 | 1.34 | 1.45 | 1.47 |
| | G' 50%, RPA (MPa) | 0.89 | 1.02 | 1.13 | 1.04 | 1.1 | 1.19 | 1.18 |
| | G' 50%, RPA (2nd Sweep) (MPa) | 0.89 | 1.02 | 1.13 | 1.04 | 1.1 | 1.19 | 1.18 |
| | 100% Modulus (Parallel to Grain) (MPa) | 4.74 | 10.68 | 15.11 | 6.01 | 6.2 | 13.33 | 13.24 |
| | 100% Modulus (Perpendicular to Grain) (MPa) | 1.94 | 2.49 | 3.02 | 2.49 | 2.61 | 3.04 | 3.03 |
| | 300% Modulus (Parallel to Grain) (MPa) | 23.67 | 26.93 | 32.43 | 28.44 | 28.99 | 32.06 | 31.92 |
| | 300% Modulus (Perpendicular to Grain) (MPa) | 9.65 | 10.11 | 11.88 | 12.29 | 12.45 | 12.11 | 11.64 |
| **Hysteresis** | TD 10%, RPA | 0.075 | 0.082 | 0.093 | 0.091 | 0.085 | 0.087 | 0.1 |
| | TD 10%, RPA (2nd Sweep) | 0.082 | 0.091 | 0.104 | 0.101 | 0.092 | 0.095 | 0.11 |
| | Zwick Rebound, 100°C (%) | 75 | 71 | 70 | 72 | 73 | 71 | 67 |
| **Stress Strain, Tear and DeMattia Cut Growth** | Tensile (Parallel to Grain) (MPa) | 62 | 43 | 41 | 63 | 65 | 48 | 45 |
| | Tensile (Perpendicular to Grain) (MPa) | 25 | 18 | 17 | 27 | 26 | 17 | 17 |
| | Elongation (Parallel to Grain) (%) | 593 | 439 | 380 | 555 | 569 | 432 | 414 |
| | Elongation (Perpendicular to Grain) (%) | 556 | 457 | 393 | 539 | 506 | 398 | 395 |
| | Strebler Adhesion, 95°C (N) | 131 | 99 | 68 | 120 | 89 | 54 | 68 |
| | Instron Tear w/ Backing, 95°C (N/mm) | 41 | 18 | 13 | 40 | 45 | 16 | 17 |
| | De Mattia, Hot Wedge Pierced (mm/min) | 0.19 | 0.32 | 0.39 | 0.19 | 0.32 | 0.39 | 0.38 |
| | Penetration Energy, 5 mm (J) | 0.14 | 0.21 | 0.3 | 0.17 | 0.18 | 0.29 | 0.34 |
| | Penetration Energy, 10 mm (J) | 0.78 | 1.23 | 1.66 | 0.93 | 1.03 | 1.62 | 1.81 |
| | Penetration Energy, 15 mm (J) | 2.2 | 3.58 | 4.63 | 2.58 | 2.95 | 4.51 | 4.96 |
| | Penetration Energy, 20 mm (J) | 4.95 | 6.88 | 8.52 | 5.7 | 6.44 | 8.34 | 9.16 |
| **Wear/ Abrasion** | DIN | 136 | 110 | 111 | 116 | 122 | 100 | 113 |
| **Cure** | Delta Torque, MDR 150°C (ΔN*m) | 14.4 | 16.4 | 19.5 | 18.4 | 16.2 | 16.7 | 16.9 |
| | T25, MDR 150°C (min) | 7.3 | 7.3 | 8 | 7.9 | 7.7 | 8 | 5.5 |
| | T90, MDR 150°C (min) | 11 | 11.2 | 11.9 | 12 | 15.7 | 16.2 | 13 |

With reference to Table 4B, Sample D, a rubber compound containing N,N'-m-phenylenedimaleimide, and Sample E, a rubber compound containing dithiodiproprionic acid, are compared against each other and against the control Sample A. As can be seen by reviewing Table 4B, the stiffness, penetration resistance, and wear or abrasion resistance of a rubber compound containing either N,N'-m-phenylenedimaleimide or dithiodiproprionic acid is increased when compared to the control. However, at higher strain levels, Sample E, containing dithiodiproprionic acid, will have a higher stiffness when compared to Sample D, containing N,N'-m-phenylenedimaleimide, while the reverse is true at lower strain levels. Moreover, while Sample D has a higher wear or abrasion resistance, Sample E has a higher penetration resistance. It should also be noted that the addition of 1 phr of either N,N'-m-phenylenedimaleimide or dithiodiproprionic acid to the rubber compound does not substantially compromise hysteresis exhibited by the rubber compound, although the addition of dithiodiproprionic acid has a smaller effect on hysteresis. However, the addition of 1 phr dithiodiproprionic acid to a rubber compound increases cure time significantly more than the addition of N,N'-m-phenylenedimaleimide. Accordingly, these experiments demonstrate that syndiotactic polybutadiene can be used to modify desired characteristics of a rubber component for a tire.

With further reference to Table 4B, Sample B, a rubber compound containing nylon, Sample C, a rubber compound containing nylon and N,N'-m-phenylenedimaleimide, and Sample F, a rubber compound containing nylon and dithiodiproprionic acid, are compared against each other and against control Sample A. As can be seen by reviewing Table 4B, the stiffness, penetration resistance, and wear or abrasion resistance of a rubber compound containing nylon is increased when compared to the control. The same characteristics for the rubber composition containing nylon and either N,N'-m-phenylenedimaleimide or dithiodiproprionic acid are either equal to or increased from the rubber composition containing nylon. However, at a higher strain level of 300%, Sample F, which contains dithiodiproprionic acid, will have a higher stiffness when compared to Sample C, which contains N,N'-m-phenylenedimaleimide, while the reverse is true at measured strain levels lower than 300%. Moreover, while Sample C has slightly higher penetration resistance, Sample F has higher wear or abrasion resistance. It should also be noted that the addition of either N,N'-m-phenylenedimaleimide or dithiodiproprionic acid to the rubber compound already containing nylon does not substantially compromise hysteresis exhibited by the rubber compound. However, the addition of 1 phr dithiodiproprionic acid to a rubber compound containing nylon increases cure time significantly more than the addition of N,N'-m-phenylenedimaleimide. Accordingly, these experiments demonstrate that dithiodiproprionic acid may be added to rubber compositions having nylon, either in addition to or instead of N,N'-m-phenylenedimaleimide, to achieve a rubber composition having increased carcass lifespan without sacrificing fuel efficiency.

With further reference to Table 4B, Sample F, a rubber compound containing nylon and dithiodiproprionic acid, and Sample G, a rubber compound containing nylon and a greater amount of dithiodiproprionic acid, are compared against each other and against control Sample A. As can be seen by reviewing Table 4B, the stiffness, penetration resistance, and wear or abrasion resistance of both rubber compounds containing nylon and dithiodiproprionic acid are increased when compared to the control. However, at higher strain levels, the rubber compound containing additional dithiodiproprionic acid has lower stiffness when compared to the rubber compound with less dithiodiproprionic acid while the reverse is true at lower strain levels. Moreover, while the rubber compound containing additional dithiodiproprionic acid (3 vs 1 phr) has an increased penetration resistance, the rubber composition containing 1 phr dithiodiproprionic acid has a higher wear or abrasion resistance. It should also be noted that the inclusion of additional dithiodiproprionic acid negatively impacts hysteresis but decreases cure time.

**Table 5A**

| **Ingredient** | **Stag e** | **Sampl e A** | **Sampl e B** | **Sampl e C** | **Sampl e D** | **Sampl e E** | **Sampl e F** | **Sampl e G** | **Sampl e H** |
|---|---|---|---|---|---|---|---|---|---|
| Natural Rubber | NP1 | 100 | 100 | 100 | 100 | 100 | 100 | 100 | 100 |
| Syndiotactic Polybutadiene¹ | NP1 | | | 10 | 10 | | 10 | | 10 |
| Carbon Black² | NP1 | 30 | 30 | 30 | 30 | 30 | 30 | 30 | 30 |
| Antioxidant - Polymerized Trimethyl Dihydroquinolin e | NP1 | 1 | 1 | 1 | 1 | 1 | 1 | 1 | 1 |
| Oil³ | NP1 | 2 | 2 | 2 | 2 | 2 | 2 | 2 | 2 |
| Zinc Oxide | NP1 | 3 | 3 | 3 | 3 | 3 | 3 | 3 | 3 |
| Stearic Acid | NP1 | 1 | 1 | 1 | 1 | 1 | 1 | 1 | 1 |
| 4 mm Nylon⁴ | NP1 | | | | | 5 | 5 | | |
| HSA Aramid Pulp/Fiber⁵ | NP1 | | | | | | | 5 | 5 |
| Carbon Black² | NP2 | 10 | 10 | 10 | 10 | 10 | 10 | 10 | 10 |
| Oil³ | NP2 | 1 | 1 | 1 | 1 | 1 | 1 | 1 | 1 |
| Sulfur | PR | 1.8 | 1.8 | 1.8 | 1.8 | 1.8 | 1.8 | 1.8 | 1.8 |
| N-N'-m phenylenedi maleimide | PR | | 1 | | 1 | 1 | 1 | 0.2 | 0.2 |
| TBBS Accelerator | PR | 1.2 | 1.2 | 1.2 | 1.2 | 1.2 | 1.2 | 1.2 | 1.2 |
| Retarder⁶ | PR | 0.1 | 0.1 | 0.1 | 0.1 | 0.1 | 0.1 | 0.1 | 0.1 |
| **Total phr** | | **151.1** | **152.1** | **161.1** | **162.1** | **157.1** | **167.1** | **156.3** | **166.3** |

| | | | | | | | | | |
|---|---|---|---|---|---|---|---|---|---|
| ¹ syndio PBD from JSR with a melting point of 126°C ² ASTM N347 carbon black ³ Naphthenic, paraffinic processing oil ⁴ Chopped nylon fiber, 4 mm length ⁵ Aramid blend, high surface area ⁶ N-cyclohexylthiophthalimide | | | | | | | | | |

With reference to Table 5A, Sample A is a control and is completely devoid of any fibers, vulcanizing reagents (e.g., N,N'-m-phenylenedimaleimide), or syndiotactic polybutadiene fibers. Samples B-H were prepared using the same mixing parameters as those of Sample A. In the first non-productive mix stage, each of the components of the above samples were combined in the amounts shown in Table 5A. In comparison to Sample A, each of Samples C and D further included 10 phr syndiotactic polybutadiene fibers having a melting point of 126°C. In further comparison to Sample A, each of Samples E and F further included 5 phr of 4 mm nylon fibers. In even further comparison to Sample A, each of Samples G and H further included 5 phr of a high surface area aramid pulp/fiber blend. Sample F, in comparison to Sample E, and Sample H, in comparison to Sample G, each further included 10 phr of the syndiotactic polybutadiene fibers.

In the third productive mixing step, additional materials were added to each of Samples B and D-H in the amounts shown in Table 5A. In comparison to Sample A, Sample B further included 1 phr of N,N'-m-phenylenedimaleimide. In comparison to Sample C, Sample D further included 1 phr of N,N'-m-phenylenedimaleimide. Each of Samples E and F further included 1 phr of N,N'-m-phenylenedimaleimide. Each of the Samples G and H further included 0.2 phr of N,N'-m-phenylenedimaleimide.

**Table 5B**

| **Compound Description** | | **Sampl e A** | **Sampl e B** | **Sampl e C** | **Sampl e D** | **Sampl e E** | **Sampl e F** | **Sampl e G** | **Sampl e H** |
|---|---|---|---|---|---|---|---|---|---|
| **Processing** | Uncured G', RPA (MPa) | 0.151 | 0.154 | 0.194 | 0.186 | 0.177 | 0.198 | 0.205 | 0.232 |
| **Stiffness** | G' 1%, RPA (MPa) | 1.605 | 2.318 | 1.383 | 1.789 | 2.439 | 1.867 | 2.22 | 1.697 |
| | G' 1%, RPA (2nd Sweep) (MPa) | 1.375 | 1.742 | 1.189 | 1.406 | 1.872 | 1.489 | 1.855 | 1.444 |
| | G' 10%, RPA (MPa) | 1.077 | 1.328 | 1.009 | 1.195 | 1.49 | 1.264 | 1.43 | 1.181 |
| | G' 10%, RPA (2nd Sweep) (MPa) | 0.967 | 1.092 | 0.887 | 0.98 | 1.243 | 1.057 | 1.267 | 1.052 |
| | G' 50%, RPA (MPa) | 0.73 | 0.805 | 0.682 | 0.739 | 0.929 | 0.814 | 0.95 | 0.804 |
| | G' 50%, RPA (2nd Sweep) (MPa) | 0.723 | 0.798 | 0.678 | 0.733 | 0.921 | 0.809 | 0.947 | 0.801 |
| | 100% Modulus (Parallel to Grain) (MPa) | 2.52 | 2.95 | 3.07 | 3.45 | 8.73 | 8.38 | 7.09 | 6.61 |
| | 100% Modulus (Perpendicul ar to Grain) (MPa) | 2.54 | 3.13 | 3.24 | 3.64 | 8.7 | 8.33 | 4.26 | 4.08 |
| | 300% Modulus (Parallel to Grain) (MPa) | 13.53 | 15.45 | 13.36 | 15.24 | 19.51 | 17.05 | 17.97 | 15.56 |
| | 300% Modulus (Perpendicul ar to Grain) (MPa) | 13.66 | 16.07 | 13.84 | 15.59 | 19.65 | 16.92 | 15.1 | 13.39 |
| **Hysteresis** | TD 10%, RPA | 0.095 | 0.125 | 0.083 | 0.095 | 0.105 | 0.093 | 0.095 | 0.092 |
| | TD 10%, RPA (2nd Sweep) | 0.126 | 0.161 | 0.117 | 0.137 | 0.142 | 0.128 | 0.128 | 0.119 |
| | Zwick Rebound, 100°C (%) | 76.15 | 74.73 | 74.22 | 73.11 | 72.3 | 70.7 | 73.81 | 74.02 |
| **Tear, Chip/Chun k, Cut Penetration** | Tensile (Parallel to Grain) (MPa) | 24.46 | 26.78 | 25.8 | 26.63 | 20.48 | 18.64 | 23.3 | 21.64 |
| | Tensile (Perpendicul ar to Grain) (MPa) | 25.98 | 27.75 | 24.31 | 27.75 | 18.58 | 18.97 | 19.32 | 19.09 |
| | Elongation (Parallel to Grain) (%) | 453 | 456 | 500 | 476 | 318 | 331 | 382 | 406 |
| | Elongation (Perpendicul ar to Grain) (%) | 479 | 464 | 472 | 495 | 286 | 343 | 373 | 408 |
| | Strebler Adhesion, 95°C (N) | 132.64 3 | 108.89 8 | 128.81 8 | 110.79 3 | 40.627 5 | 43.695 | 23.185 | 32.017 5 |
| | Instron Tear w/ Backing, 100°C (N/mm) | 39.386 3 | 34.719 | 35.432 3 | 27.992 1 | 10.577 4 | 10.170 2 | 7.8025 | 11.402 7 |
| | Penetration Energy, 5 mm (J) | 0.13 | 0.1533 3 | 0.17 | 0.19 | 0.2666 7 | 0.3 | 0.33 | 0.30 |
| | Penetration Energy, 10 mm (J) | 0.7166 7 | 0.84 | 0.9266 7 | 1.0266 7 | 1.4566 7 | 1.6266 7 | 1.85 | 1.71 |
| | Penetration Energy, 15 mm (J) | 2.06 | 2.4 | 2.5933 3 | 2.8666 7 | 4.1066 7 | 4.44 | 5.23 | 4.73 |
| | Penetration Energy, 20 mm (J) | 4.61 | 5.36 | 5.64 | 6.0733 3 | 7.8266 7 | 8.2333 3 | 9.58 | 8.57 |
| **Wear/ Abrasion** | DIN | 171 | 146 | 144 | 117 | 102 | 117 | 106 | 121 |
| **Cure** | Delta Torque, MDR 150°C (ΔN*m) | 14.03 | 17.71 | 11.95 | 14.39 | 18.97 | 15.76 | 18.35 | 14.99 |
| | T25, MDR 150°C (min) | 7.59 | 8.26 | 7.92 | 8.68 | 8.3 | 9.02 | 8.26 | 8.83 |
| | T90, MDR 150°C (min) | 11.41 | 12.37 | 12.19 | 13.66 | 12.36 | 13.8 | 12.75 | 13.79 |

With reference to Table 5B, Sample B, a rubber compound containing N,N'-m-phenylenedimaleimide, Sample C, a rubber compound containing syndiotactic polybutadiene, and Sample D, a rubber compound containing both N,N'-m-phenylenedimaleimide and syndiotactic polybutadiene, are compared against each other and against control Sample A. As can be seen by viewing Table 5B, the inclusion of N,N'-m-phenylenedimaleimide and/or syndiotactic polybutadiene increases the stiffness, penetration resistance, and wear or abrasion resistance of the rubber compound when compared to the control. Moreover, the penetration resistance and the wear or abrasion resistance of Sample D, containing both N,N'-m-phenylene dimaleimide and syndiotactic polybutadiene, is higher than that of a rubber compound only containing one. It should also be noted that the addition of either or both of N,N'-m-phenylenedimaleimide and/or syndiotactic polybutadiene to the rubber compound does not substantially compromise hysteresis exhibited by the rubber compound nor substantially increase cure time. Accordingly, these experiments show that rubber compounds including syndiotactic polybutadiene, with or without the addition of N,N'-m-phenylenedimaleimide, can improve certain tire characteristics.

With further reference to Table 5B, Sample E, a rubber compound containing nylon and N,N'-m-phenylenedimaleimide, and Sample F, a rubber compound containing nylon, N,N'-m-phenylenedimaleimide, and syndiotactic polybutadiene, are compared against each other and against control Sample A. As can be seen by viewing Table 5B, both Sample E and Sample F have increased stiffness, penetration resistance, and wear or abrasion resistance when compared with the control. When compared to each other, the Sample F, including syndiotactic polybutadiene, has increased penetration resistance while Sample E, not including syndiotactic polybutadiene, has increased stiffness and wear or abrasion resistance. It should be noted that the inclusion of syndiotactic polybutadiene appears to lessen the adverse impact on hysteresis exhibited by the rubber compound, but increases the cure time. Accordingly, these experiments demonstrate that the inclusion of syndiotactic polybutadiene can be used to tune desired characteristics of a rubber compound to be used in a tire to increase fuel efficiency without sacrificing gains in tire carcass lifespan.

With further reference to Table 5B, Sample G, a rubber compound containing a HSA aramid pulp/fiber blend and N,N'-m-phenylenedimaleimide, and Sample H, a rubber compound containing a HSA aramid pulp/fiber blend, N,N'-m-phenylenedimaleimide, and syndiotactic polybutadiene, are compared against each other and against control Sample A. As can be seen by viewing Table 5B, both Sample G and Sample H increase stiffness, penetration resistance, and wear or abrasion resistance when compared to the control. When compared with each other, the same characteristics are increased for Sample G, not including syndiotactic polybutadiene, when compared with Sample H, including syndiotactic polybutadiene. It should be noted that while neither Sample G or H substantially compromises hysteresis exhibited by the rubber compounds, the inclusion of syndiotactic polybutadiene increases the cure time of Sample H. Accordingly, these experiments show that various combinations of fiber types and the inclusion of the maleimide can improve both low strain stiffness and penetration resistance without major changes to other critical cured properties.

## Claims

1. A pneumatic tire comprising a tread (12), a carcass (18) situated below the tread (18) for acting as a supporting structure for the tread (12), and a fiber-reinforced rubber layer (26) situated between the carcass (18) and the tread (12), the fiber-reinforced rubber layer (26) including a rubber compound comprising:
100 parts of one or more rubbers wherein the one or more rubbers is the total amount of rubber for the rubber compound, and
a crosslinking agent and/or a vulcanizing agent wherein the crosslinking agent includes a dithiodicarboxylic acid and wherein the vulcanizing agent includes a dimaleimide, the dithiodicarboxylic acid, if used, being present in the rubber compound in an amount from 0.1 to 5 phr, alternatively from 0.5 phr to 3 phr, and the dimaleimide, if used, being present in the rubber compound in an amount from 0.1 to 5 phr, alternatively from 0.5 phr to 2 phr; **characterized in that** the rubber compound further comprises:
1 to 20 phr of one or more types of chopped fiber (28) selected from nylon, aramid, carbon, cotton, and polyester, the aramid fiber, if used, including aramid pulp and/or aramid fiber; and
carbon black and/or silica.

2. The pneumatic tire of claim 1 wherein the crosslinking agent is dithiodiproprionic acid and/or the vulcanizing agent is N,N'-m-phenylene dimaleimide.

3. The pneumatic tire of claim 1 or 2 wherein, when the vulcanizing agent is present, the rubber compound further includes an accelerator, which is selected from a dithiocarbamate or a salt thereof and is present in the rubber compound in an amount from 0.1 and 5 phr.

4. The pneumatic tire of claim 3 wherein the dithiocarbamate or the salt thereof is zinc dibenzyl dithiocarbamate.

5. The pneumatic tire of at least one of the previous claims wherein the rubber compound further includes a secondary fiber (28a) selected from a syndiotactic polybutadiene fiber.

6. The pneumatic tire of at least one of the previous claims wherein the fiber-reinforced rubber layer (26) defines a belt ply layer (23) in the tire (10).

7. The pneumatic tire of claim 6 wherein the fiber-reinforced rubber layer (26) that defines the belt ply layer (23) in the tire (10) is situated directly adjacent the tread (12) and the carcass (18).

8. The pneumatic tire of at least one of the previous claims wherein the fiber-reinforced rubber layer (26) is situated directly adjacent the tread (12).

9. The pneumatic tire of at least one of the previous claims wherein the one or more rubbers is natural rubber or polybutadiene rubber, preferably cis- polybutadiene.

10. The pneumatic tire of at least one of the previous claims wherein the one or more types of fiber (28) is nylon and/or aramid and present in an amount from 1 to 20 phr, alternatively 3 to 15 phr.

11. The pneumatic tire of at least one of the previous claims wherein the nylon, carbon, cotton, and polyester fiber has a length (L) from 0.5 mm to 6 mm and a diameter (D) from 0.015 mm to 0.035 mm and the aramid fiber has a length from 0.05 mm to 2 mm and a diameter from 0.010 mm to 0.020 mm.

12. The pneumatic tire of at least one of the previous claims wherein the nylon, carbon, cotton, and polyester fiber, if used, has a length to diameter (L/D) aspect ratio from 14 to 400 and wherein the aramid fiber, if used, has a length to diameter (L/D) aspect ratio from 2.5 to 200.

13. The pneumatic tire of at least one of the previous claims wherein the crosslinking agent is dithiodiproprionic acid, the vulcanizing agent is N,N'-m-phenylenedimaleimide, the accelerator is zinc dibenzyl dithiocarbamate, with each being present in the rubber compound in an amount from 0.1 to 5 phr.

14. A method of making a pneumatic tire, the method comprising
positioning a tire carcass (18) on a tire-building apparatus;
positioning a fiber-reinforced rubber layer (23) on the tire carcass (18), the fiber-reinforced rubber layer (23) including a rubber compound comprising:
100 parts of one or more rubbers wherein the one or more rubbers is the total amount of rubber for the rubber compound; 1 to 20 phr of one or more types of chopped fiber (28) selected from nylon, aramid, carbon, cotton, and polyester, the aramid fiber, if used, including aramid pulp and/or aramid fiber; a crosslinking agent and/or a vulcanizing agent, wherein the crosslinking agent includes a dithiodicarboxylic acid and wherein the vulcanizing agent includes a dimaleimide, the dithiodicarboxylic acid, if used, being present in the rubber compound in an amount from 0.1 to 5 phr and the dimaleimide, if used, being present in the rubber compound in an amount from 0.1 to 5 phr; and carbon black and/or silica; and
disposing radially outwardly of the fiber-reinforced rubber layer (23) a tread (12) to define an uncured tire assembly.

15. The method of claim 14 further comprising curing the uncured tire assembly under conditions of heat and pressure.

## Patentansprüche

1. Luftreifen, der eine Lauffläche (12), eine Karkasse (18), die unterhalb der Lauffläche (12) angebracht ist, um als Stützstruktur für die Lauffläche (12) zu dienen, und eine faserverstärkte Kautschukschicht (26) umfasst, die zwischen der Karkasse (18) und der Lauffläche (12) angebracht ist; wobei die faserverstärkte Kautschukschicht (26) eine Kautschukverbindung enthält, die Folgendes umfasst:
100 Teile eines oder mehrerer Kautschuke; wobei der eine oder die mehreren Kautschuke die Gesamtmenge an Kautschuk für die Kautschukverbindung darstellen;
ein Vernetzungsmittel und/oder ein Vulkanisationsmittel; wobei das Vernetzungsmittel eine Dithiodicarboxylsäure umfasst; und wobei das Vulkanisationsmittel ein Dimaleinimid umfasst; wobei die Dithiodicarboxylsäure, falls verwendet, in der Kautschukmischung in einer Menge von 0,1 bis 5 phr, alternativ von 0,5 phr bis 3 phr, enthalten ist; und wobei das Dimaleinimid, falls verwendet, in der Kautschukmischung in einer Menge von 0,1 bis 5 phr, alternativ von 0,5 phr bis 2 phr, enthalten ist; **dadurch gekennzeichnet, dass** die Kautschukverbindung ferner Folgendes umfasst:
1 bis 20 phr einer oder mehrerer Arten von geschnittenen Fasern (28), die aus Nylon, Aramid, Kohlenstoff, Baumwolle und Polyester ausgewählt sind; wobei die Aramidfaser, falls verwendet, Aramidpulpe und/oder Aramidfaser umfasst; und
Ruß und/oder Silica.

2. Luftreifen nach Anspruch 1, wobei das Vernetzungsmittel Dithiopropionsäure und/oder das Vulkanisationsmittel N,N'-m-Phenylendimaleinimid ist.

3. Luftreifen nach Anspruch 1 oder 2, wobei, wenn das Vulkanisationsmittel vorhanden ist, die Kautschukmischung zusätzlich einen Beschleuniger enthält, der aus einem Dithiocarbamat oder einem Salz davon ausgewählt ist und in der Kautschukmischung in einer Menge von 0,1 bis 5 ThK vorhanden ist.

4. Luftreifen nach Anspruch 3, wobei das Dithiocarbamat oder das Salz davon Zinkdibenzyl-Dithiocarbamat ist.

5. Luftreifen nach mindestens einem der vorhergehenden Ansprüche, wobei die Gummimischung ferner eine Sekundärfaser (28a) umfasst, die aus einer syndiotaktischen Polybutadienfaser ausgewählt ist.

6. Luftreifen nach mindestens einem der vorhergehenden Ansprüche, wobei die faserverstärkte Kautschukschicht (26) eine Gürtelvlieslage (23) in dem Luftreifen (10) definiert.

7. Luftreifen nach Anspruch 6, wobei die faserverstärkte Kautschukschicht (26), die eine Gürtelvlieslage (23) in dem Luftreifen (10) definiert, direkt neben der Lauffläche (12) und der Karkasse (18) angebracht ist.

8. Luftreifen nach mindestens einem der vorhergehenden Ansprüche, wobei die faserverstärkte Kautschukschicht (26) direkt neben der Lauffläche (12) angebracht ist.

9. Luftreifen nach mindestens einem der vorhergehenden Ansprüche, wobei der eine oder die mehreren Kautschuke einen Naturkautschuk oder einen Polybutadienkautschuk, vorzugsweise cis-Polybutadien, darstellen.

10. Luftreifen nach mindestens einem der vorhergehenden Ansprüche, wobei die eine oder mehrere Faserarten (28) Nylon und/oder Aramid darstellen und in einer Menge von 1 bis 20 ThK, alternativ 3 bis 15 ThK, vorhanden sind.

11. Luftreifen nach mindestens einem der vorstehenden Ansprüche, wobei die Nylon-, Kohlenstoff-, Baumwoll- und Polyesterfaser eine Länge (L) von 0,5 mm bis 6 mm und einen Durchmesser (D) von 0,015 mm bis 0,035 mm besitzt und die Aramidfaser eine Länge von 0,05 mm bis 2 mm und einen Durchmesser von 0,010 mm bis 0,020 mm besitzt.

12. Luftreifen nach mindestens einem der vorstehenden Ansprüche, wobei die Nylon-, Kohlenstoff-, Baumwoll- und Polyesterfaser, falls verwendet, ein Querschnittsverhältnis von Länge zu Durchmesser (L/D) von 14 bis 400 besitzt; und wobei die Aramidfaser, falls verwendet, ein Querschnittsverhältnis von Länge zu Durchmesser (L/D) von 12,5 bis 200 besitzt.

13. Luftreifen nach mindestens einem der vorstehenden Ansprüche, wobei das Vernetzungsmittel Dithiopropionsäure ist, das Vulkanisationsmittel N,N'-m-Phenylendimaleinimid ist, der Beschleuniger Zinkdibenzyldithiocarbamat ist; wobei jedes in der Kautschukmischung in einer Menge von 0,1 bis 5 ThK vorhanden ist.

14. Verfahren zur Herstellung eines Luftreifens, wobei das Verfahren das Folgende umfasst:
das Anbringen einer Karkasse (18) eines Luftreifens an einer Luftreifen-Herstellungsvorrichtung;
das Anbringen einer faserverstärkten Kautschukschicht (23) auf der Karkasse (18) des Luftreifens, wobei die faserverstärkte Kautschukschicht (23) eine Kautschukmischung umfasst, die Folgendes umfasst:
100 Teile eines oder mehrerer Kautschuke; wobei der eine oder die mehreren Kautschuke die Gesamtmenge an Kautschuk für die Kautschukverbindung darstellen; 1 bis 20 phr einer oder mehrerer Arten von geschnittenen Fasern (28), die aus Nylon, Aramid, Kohlenstoff, Baumwolle und Polyester ausgewählt sind; wobei die Aramidfaser, falls verwendet, Aramidpulpe und/oder Aramidfasern umfasst; ein Vernetzungsmittel und/oder ein Vulkanisationsmittel; wobei das Vernetzungsmittel eine Dithiodicarboxylsäure umfasst; und wobei das Vulkanisationsmittel ein Dimaleinimid umfasst; wobei die Dithiodicarboxylsäure, falls verwendet, in der Kautschukmischung in einer Menge von 0,1 bis 5 phr enthalten ist; und wobei das Dimaleinimid, falls verwendet, in der Kautschukmischung in einer Menge von 0,1 bis 5 phr enthalten ist: und Ruß und/oder Silica; und
das Anbringen einer Lauffläche (12) in der radialen Richtung außerhalb der faserverstärkten Kautschukschicht (23), um einen Satz von unvulkanisiertem Luftreifen zu definieren.

15. Verfahren nach Anspruch 14, das ferner das Vulkanisieren des unvulkanisierten Satzes von Luftreifen unter Wärme- und Druckbedingungen umfasst.

## Revendications

1. Bandage pneumatique qui comprend une bande de roulement (12), une carcasse (18) qui est située en dessous de la bande de roulement (12) pour faire office de structure de support pour la bande de roulement (12), et une couche de caoutchouc (26) renforcée par des fibres, qui est située entre la carcasse (18) et la bande de roulement (12) ; dans lequel la couche de caoutchouc (26) renforcée par des fibres englobe un composé de caoutchouc qui comprend :
100 parties d'un ou de plusieurs caoutchoucs ; dans lequel lesdits un ou plusieurs caoutchoucs représentent la quantité totale de caoutchouc pour le composé de caoutchouc ;
un agent de réticulation et/ou un agent de vulcanisation ; dans lequel l'agent de réticulation englobe un acide dithiodicarboxylique ; et dans lequel l'agent de vulcanisation englobe un dimaléimide ; dans lequel l'acide dithiodicarboxylique, lorsqu'on l'utilise, est présent dans le composé de caoutchouc en une quantité allant de 0,1 à 5 phr, en variante de 0,1 phr à 3 phr; et dans lequel le dimaléimide, lorsqu'on l'utilise, est présent dans le composé de caoutchouc en une quantité allant de 0,1 à 5 phr, en variante de 0,5 phr à 2 phr; **caractérisé en ce que** le composé de caoutchouc comprend en outre :
de 1 à 20 phr d'un ou de plusieurs types de fibres coupées (28) qui sont choisies parmi du nylon, de l'aramide, du carbone, du coton et du polyester ; dans lequel, à la fibre d'aramide, lorsqu'on l'utilise englobe de la pulpe d'aramide et/ou des fibres d'aramide ; et
du noir de carbone et/ou de la silice.

2. Bandage pneumatique selon la revendication 1, dans lequel l'agent de réticulation est l'acide dithiopropionique et/ou l'agent de vulcanisation est le N,N'-m-phénylène dimaléimide.

3. Bandage pneumatique selon la revendication 1 ou 2, dans lequel, lorsque l'agent de vulcanisation est présent, le composé de caoutchouc englobe en outre un accélérateur qui est choisi parmi un dithiocarbamate ou un sel de ce dernier et qui est présent dans le composé de caoutchouc en une quantité allant de 0,1 à 5 phr.

4. Bandage pneumatique selon la revendication 3, dans lequel le dithiocarbamate ou le sel de ce dernier est le dibenzyl dithiocarbamate de zinc.

5. Bandage pneumatique selon au moins une des revendications précédentes, dans lequel le composé de caoutchouc englobe en outre une fibre secondaire (28a) qui est choisie à partir d'une fibre de polybutadiène syndiotactique.

6. Bandage pneumatique selon au moins une des revendications précédentes, dans lequel la couche de caoutchouc (26) renforcée par des fibres définit une couche de nappe de ceinture (23) dans le bandage pneumatique (10).

7. Bandage pneumatique selon la revendication 6, dans lequel dans lequel la couche de caoutchouc (26) renforcée par des fibres qui définit une couche de nappe de ceinture (23) dans le bandage pneumatique (10) est située directement en position adjacente à la bande de roulement (12) et la carcasse (18).

8. Bandage pneumatique selon au moins une des revendications précédentes, dans lequel la couche de caoutchouc (26) renforcée par des fibres est située directement en position adjacente à la bande de roulement (12).

9. Bandage pneumatique selon au moins une des revendications précédentes, dans lequel lesdits un ou plusieurs caoutchoucs représentent un caoutchouc naturel ou un caoutchouc de polybutadiène, de préférence du cis- polybutadiène.

10. Bandage pneumatique selon au moins une des revendications précédentes, dans lequel lesdits un ou plusieurs types de fibres (28) représentent du nylon et/ou de l'aramide et son présents en une quantité de 1 à 20 phr, en variante de 3 à 15 phr.

11. Bandage pneumatique selon au moins une des revendications précédentes, dans lequel la fibre en nylon, en carbone, en coton et en polyester possède une longueur (L) de 0,5 mm à 6 mm et un diamètre (D) de 0,015 mm à 0,035 mm et la fibre d'aramide possède une longueur de 0,05 mm à 2 mm et un diamètre de 0,010 mm à 0,020 mm.

12. Bandage pneumatique selon au moins une des revendications précédentes, dans lequel la fibre en nylon, en carbone, en coton et en polyester, si on l'utilise, possède un rapport d'aspect entre la longueur et le diamètre (L/D) de 14 à 400 ; et dans lequel dans lequel la fibre en aramide, si on l'utilise, possède un rapport d'aspect entre la longueur et le diamètre (L/D) de 12,5 à 200.

13. Bandage pneumatique selon au moins une des revendications précédentes, dans lequel l'agent de réticulation est l'acide dithiopropionique, l'agent de vulcanisation est le N,N'-m-phénylène dimaléimide, l'accélérateur est le dibenzyl dithiocarbamate de zinc ; dans lequel chacun est présent dans le composé de caoutchouc en une quantité de 0,1 à 5 phr.

14. Procédé de confection d'un bandage pneumatique, le procédé comprenant le fait de :
disposer une carcasse (18) d'un bandage pneumatique sur un appareil de confection de bandage pneumatique ;
disposer une couche de caoutchouc (23) renforcée par des fibres sur la carcasse (18) du bandage pneumatique, dans lequel la couche de caoutchouc (23) renforcée par des fibres englobe un composé de caoutchouc qui comprend :
100 parties d'un ou de plusieurs caoutchoucs ; dans lequel lesdits un ou plusieurs caoutchoucs représentent la quantité totale de caoutchouc pour le composé de caoutchouc ; de 1 à 20 phr d'un ou de plusieurs types de fibres coupées (28) qui sont choisies parmi du nylon, de l'aramide, du carbone, du coton et du polyester ; dans lequel, à la fibre d'aramide, lorsqu'on l'utilise englobe de la pulpe d'aramide et/ou des fibres d'aramide ; un agent de réticulation et/ou un agent de vulcanisation ; dans lequel l'agent de réticulation englobe un acide dithiodicarboxylique ; et dans lequel l'agent de vulcanisation englobe un dimaléimide; dans lequel l'acide dithiodicarboxylique, lorsqu'on l'utilise, est présent dans le composé de caoutchouc en une quantité allant de 0,1 à 5 phr ; et dans lequel le dimaléimide, lorsqu'on l'utilise, est présent dans le composé de caoutchouc en une quantité allant de 0,1 à 5 phr ; et du noir de carbone et/ou de la silice ; et
disposer à l'extérieur, dans la direction radiale, de la couche de caoutchouc (23) renforcée par des fibres une bande de roulement (12) afin de définir un assemblage de bandage pneumatique non vulcanisé.

15. Procédé selon la revendication 14, qui comprend en outre le fait de vulcaniser l'assemblage de bandage pneumatique non vulcanisé dans des conditions de chaleur et de pression.
